(19) Europäisches Patentamt / European Patent Office / Office européen des brevets

(11) **EP 4 465 742 A1**

(12) **EUROPEAN PATENT APPLICATION**
published in accordance with Art. 153(4) EPC

(43) Date of publication:
**20.11.2024 Bulletin 2024/47**

(21) Application number: **22920285.8**

(22) Date of filing: **14.01.2022**

(51) International Patent Classification (IPC):
**H04W 74/08** (2024.01)     **H04W 4/70** (2018.01)
**H04W 72/04** (2023.01)

(52) Cooperative Patent Classification (CPC):
**H04W 4/70; H04W 72/04; H04W 74/08**

(86) International application number:
**PCT/JP2022/001177**

(87) International publication number:
**WO 2023/135760 (20.07.2023 Gazette 2023/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **SHIBAIKE, Naoya**
  **Tokyo 100-6150 (JP)**
• **MATSUMURA, Yuki**
  **Tokyo 100-6150 (JP)**
• **NAGATA, Satoshi**
  **Tokyo 100-6150 (JP)**
• **WANG, Jing**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL AND COMMUNICATION METHOD**

(57)    A terminal according to an aspect of the present disclosure includes: a control section that configures a first information portion on a first resource for transmitting a random access channel, and configures a second information portion on a second resource for transmitting the random access channel, the second resource being a resource at least partially different from the first resource; and a transmission section that transmits the random access channel to a base station using the first resource based on the first information portion, and transmits the random access channel to the base station using the second resource based on the second information portion.

FIG. 11

**EP 4 465 742 A1**

**Description**

Technical Field

The present disclosure relates to a terminal and a communication method.

Background Art

3rd Generation Partnership Project (3GPP) has specified the 5th generation mobile communication system (also referred to as 5G, New Radio (NR), or Next Generation (NG)), and has been further working on the specification of the next generation called Beyond 5G, 5G Evolution, or 6G.
In Long Term Evolution (LTE), uplink (UL) data transmission from a terminal is enabled when UL synchronization is established between a base station and the terminal. Thus, LTE supports a random access procedure for establishing the UL synchronization. Note that the random access procedure may be referred to as a random access channel (RACH) procedure, an access procedure, etc. Also, a random access procedure similar to that in LTE is specified in NR (Non Patent Literatures (hereinafter, referred to as NPLs) 1, 2, and 3, for example).
In addition, agreement has been reached in 3GPP Release 18, for example, on an work item (WI) related to a physical random access channel (PRACH) coverage enhancement including multiple transmissions of a PRACH using the same beam as for a synchronization signal block (SSB) for a 4-step random access procedure. Note that the PRACH may be referred to as, for example, a random access channel, an uplink channel, and an uplink signal.

Citation List

Non Patent Literature

NPL 1
3GPP TS 38.211 V17.0.0 (2021-12)
NPL 2
3GPP TS 38.213 V17.0.0 (2021-12)
NPL 3
3GPP TS 38.321 V16.7.0 (2021-12)
NPL 4
"Further NR Coverage Enhancement", RP-213579, 3GPP TSG RAN Meeting #94-e, 3GPP, December, 2021

Summary of Invention

As described above, PRACH repetition is studied for a future radio communication system. Although this causes a challenge of how to control the PRACH repetition in the random access procedure, a specific operation on the PRACH repetition has not been fully studied. Inappropriate PRACH repetition possibly causes deterioration of communication quality.
An aspect of the present disclosure provides a terminal and a communication method each capable of appropriately performing PRACH repetition in a random access procedure.
A terminal according to an embodiment of the present disclosure includes: a control section that configures a first information portion on a first resource for transmitting a random access channel, and configures a second information portion on a second resource for transmitting the random access channel, the second resource being a resource at least partially different from the first resource; and a transmission section that transmits the random access channel to a base station using the first resource based on the first information portion, and transmits the random access channel to the base station using the second resource based on the second information portion.
A communication method according to an embodiment of the present disclosure includes: configuring, by a terminal, a first information portion on a first resource for transmitting a random access channel; configuring, by the terminal, a second information portion on a second resource for transmitting the random access channel, the second resource being a resource at least partially different from the first resource; transmitting, by the terminal, the random access channel to a base station using the first resource based on the first information portion; and transmitting, by the terminal, the random access channel to the base station using the second resource based on the second information portion.

Brief Description of Drawings

FIG. 1 illustrates an exemplary radio communication system according to an embodiment of the present disclosure;
FIG. 2 illustrates exemplary frequency ranges used in the radio communication system according to an embodiment of the present disclosure;
FIG. 3 illustrates exemplary configurations of a radio frame, a subframe, and a slot used in the radio communication system according to an embodiment of the present disclosure;
FIG. 4 is a sequence diagram illustrating an exemplary CBRA procedure;
FIG. 5 is a sequence diagram illustrating another exemplary CBRA procedure;
FIG. 6 is a sequence diagram illustrating an exemplary CFRA procedure;
FIG. 7 is a table illustrating an existing (conventional) random access configuration;
FIG. 8 schematically illustrates a random access configuration in a case where the PRACH configuration index is a specific value in FIG. 7;
FIG. 9 illustrates an existing information element "ssb-perRACH-OccasionAndCB-PreamblesPerSSB" specifying a relation between SSB and RO;
FIG. 10 is a sequence diagram illustrating transmissions of SSB, SIB1 including an additional PRACH configuration index, and PRACHs according to an embodiment of the present disclosure;
FIG. 11 is a sequence diagram illustrating transmissions of SSB, SIB1 including a conventional PRACH configuration index, and PRACHs according to an embodiment of the present disclosure;
FIG. 12 is a new table for a random access configuration for PRACH repetition according to an embodiment of the present disclosure;
FIG. 13 illustrates an extension for an existing information element "RACH-ConfigCommon" according to an embodiment of the present disclosure;
FIG. 14 is a diagram for explaining determination of a physical root sequence index from a logical root sequence index for the PRACH repetition according to an embodiment of the present disclosure;
FIG. 15 illustrates extensions for existing preamble groups according to an embodiment of the present disclosure;
FIG. 16 is a block diagram illustrating an exemplary configuration of a gNB (base station) according to an embodiment of the present disclosure;
FIG. 17 is a block diagram illustrating an exemplary configuration of a UE (terminal) according to an embodiment of the present disclosure;
FIG. 18 illustrates an exemplary hardware configuration of the gNB (base station) and the UE (terminal) according to an embodiment of the present disclosure; and
FIG. 19 illustrates an exemplary configuration of a vehicle according to an embodiment of the present disclosure.

Description of Embodiments

Hereinafter, embodiments according to an aspect of the present disclosure will be described in detail with reference to the accompanying drawings.

(Embodiment)

<Radio Communication System>

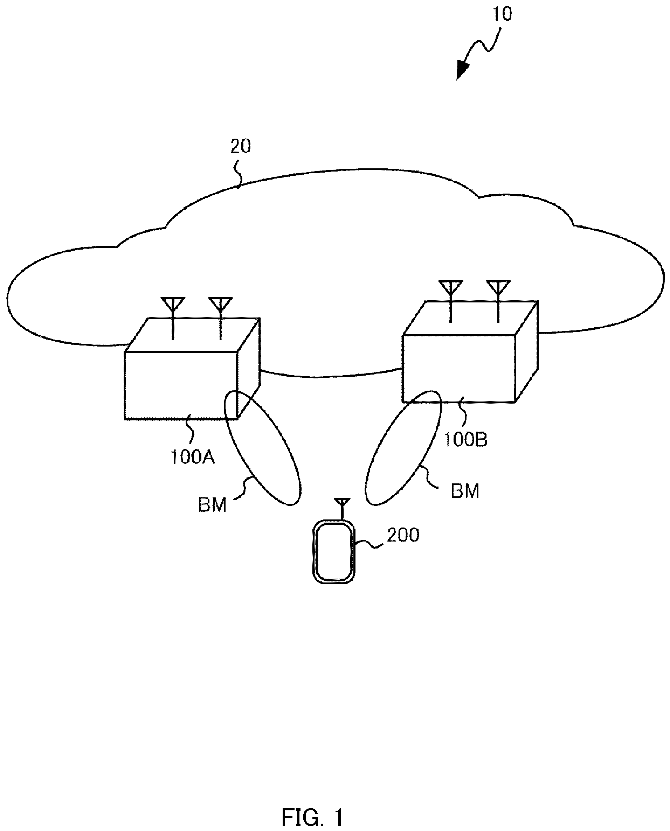

FIG. 1 illustrates exemplary radio communication system 10 according to an embodiment of the present disclosure. Radio communication system 10 is a radio communication system conforming to 5G NR, and includes Next Generation-Radio Access Network 20 (hereinafter, NG-RAN 20) and terminal 200 (hereinafter, user equipment (UE) 200).
Note that radio communication system 10 may be a radio communication system conforming to a scheme called Beyond 5G, 5G Evolution, or 6G.
NG-RAN 20 includes base station 100A (hereinafter, gNB 100A) and base station 100B (hereinafter, gNB 100B). Note that gNB 100A and gNB 100B are collectively referred to as gNB 100 when they need not be distinguished from each other. Additionally, the numbers of gNBs and UEs are not limited to those in the example illustrated in FIG. 1.
NG-RAN 20 actually includes a plurality of NG-RAN nodes, specifically, gNBs (or ng-eNBs), and connects to a core network conforming to 5G (5GC, not illustrated). Note that NG-RAN 20 and 5GC may be simply expressed as a "network". In addition, the gNB may be read as a network (NW) in the following.
gNB 100A and gNB 100B are base stations conforming to 5G, and perform radio communication conforming to 5G with UE 200. gNB 100A, gNB 100B, and UE 200 may support, for example, multiple-input multiple-output (MIMO) for generating a beam BM with higher directivity, carrier aggregation (CA) for using a plurality of component carriers (CCs) aggregated together, and dual connectivity (DC) for performing communication between the UE and each of the two NG-RAN nodes, by controlling radio signals transmitted from a plurality of antenna elements.

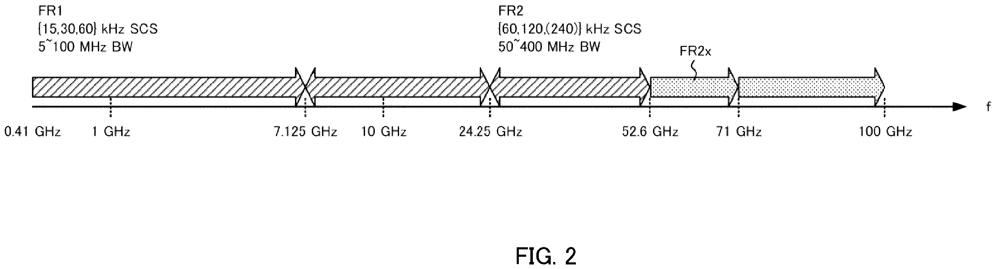

Further, radio communication system 10 may support a plurality of frequency ranges (FRs). FIG. 2 illustrates exemplary frequency ranges used in radio communication system 10. As illustrated in FIG. 2, radio communication system 10 may support FR1 and FR2. The frequency band of each FR is as follows.

> FR1: 410 MHz to 7.125 GHz
> FR2: 24.25 GHz to 52.6 GHz

FR1 may use sub-carrier spacing (SCS) of 15 kHz, 30 kHz, or 60 kHz, and may use a bandwidth (BW) of 5 to 100 MHz. FR2 uses frequency higher than FR1. FR2 may use the SCS of 60 kHz or 120 kHz (240 kHz may also be included), and may use a bandwidth (BW) of 50 to 400 MHz.

Note that the SCS may be interpreted as numerology. The numerology is defined in 3GPP TS 38.300, and corresponds to a single sub-carrier spacing in frequency domain.

Radio communication system 10 may further support a frequency band higher than that of FR2. To be more specific, radio communication system 10 may support a frequency band up to 114.25 GHz exceeding 52.6 GHz. Such high frequency band may be referred to as "FR2x" for convenience. In a case where a band exceeding 52.6 GHz is used, Cyclic Prefix-Orthogonal Frequency Division Multiplexing (CP-OFDM)/Discrete Fourier Transform-Spread-Orthogonal Frequency Division Multiplexing (DFT-S-OFDM), which have larger SCS, may be applied.

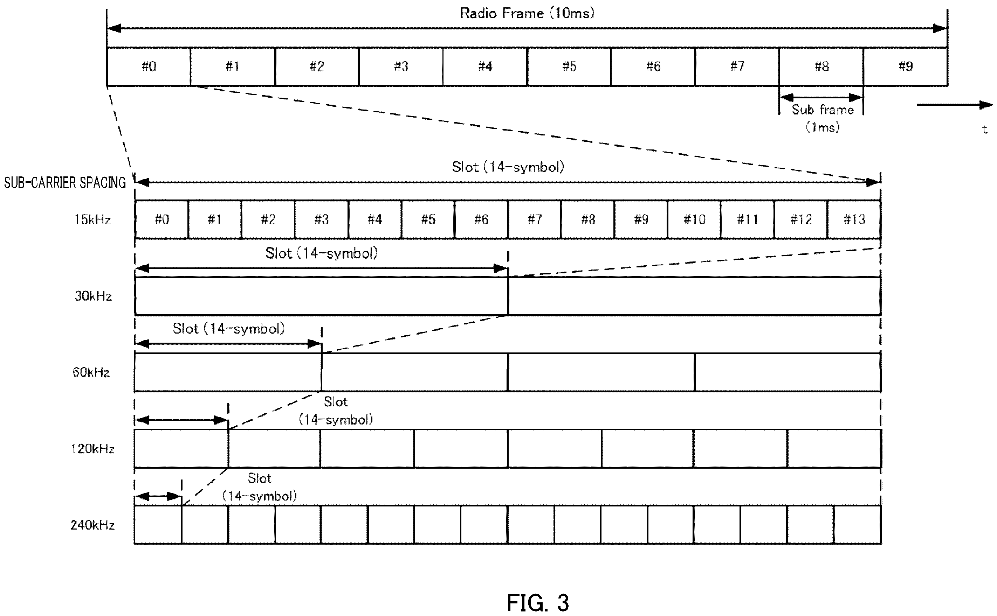

FIG. 3 illustrates exemplary configurations of a radio frame (system frame), a subframe, and a slot used in radio communication system 10. As illustrated in FIG. 3, a single slot is composed of 14 symbols. The larger (broader) the SCS is, the shorter a symbol duration (and slot duration) is. The SCS is not limited to the spacings (frequencies) illustrated in FIG. 3, however. For example, 480 kHz and 960 kHz may be used as the SCS.

In addition, the number of symbols composing a single slot is not necessarily 14 symbols (may be 28 or 56 symbols, for example). Further, the number of slots per subframe may be different for each SCS.

Note that the time direction (t) illustrated in FIG. 3 may be referred to as time domain, a symbol duration, or symbol time, for example. Additionally, the frequency direction may be referred to as frequency domain, a resource block, a subcarrier, a bandwidth part (BWP), for example.

Radio communication system 10 may support coverage enhancement (CE) for extending a coverage of a cell (or may be a physical channel) formed by gNB 100. In the coverage enhancement, a mechanism for increasing the reception success rate of various physical channels may be provided, such as PRACH repetition (i.e., PRACH repetition transmission).

For example, UE 200 receives information on a random access procedure from gNB 100 as a downlink (DL) signal, e.g., system information block type 1 (SIB1).

UE 200, for example, transmits a PRACH to gNB 100 as a UL signal using a RACH occasion (RO), which is a resource for transmitting a random access preamble. UE 200 repeatedly transmits the PRACH to gNB 100 as a UL signal, for example,

The UL signal may include, for example, a UL data signal and control information. The UL signal may include information on the processing capability of UE 200 (e.g., UE capability), for example. The UL signal may also include a reference signal.

A channel used for UL signal transmission includes, for example, a data channel and a control channel. For example, the data channel includes a physical uplink shared channel (PUSCH), and the control channel includes a physical uplink control channel (PUCCH). UE 200 transmits control information using the PUCCH, and transmits a UL data signal using the PUSCH, for example. Note that the PUSCH is an example of an uplink shared channel, and the PUCCH is an example of an uplink control channel. The shared channel may be referred to as a data channel.

A reference signal included in the UL signal may include at least one of a demodulation reference signal (DMRS), a phase tracking reference signal (PTRS), a channel state information-reference signal (CSI-RS), a sounding reference signal (SRS), and a positioning reference signal (PRS) for position information, for example. The reference signal such as the DMRS and PTRS is used for demodulation of the UL data signal, and transmitted using the PUSCH, for example.

In response to the operation of UE 200, gNB 100 transmits information on a RACH procedure to UE 200 as a DL signal (e.g., SIB1 etc.).

In addition, gNB 100, for example, receives the PRACH from UE 200 as the UL signal. For example, gNB 100 repeatedly receives the PRACH from UE 200 as the UL signal.

A channel used for DL signal transmission includes, for example, a data channel and a control channel. For example, the data channel includes a physical downlink shared channel (PDSCH), and the control channel includes a physical downlink control channel (PDCCH). gNB 100 transmits control information to UE 200 using the PDCCH, and transmits a DL data signal to UE 200 using the PDSCH, for example. Note that the PDSCH is an example of a downlink shared channel, and the PDCCH is an example of a downlink control channel. Note that the PDCCH may be read as downlink control information (DCI) and control information transmitted in the PDCCH, for example.

A reference signal included in the DL signal may include at least one of a DMRS, a PTRS, a CSI-RS, an SRSRS, and a PRS for position information, for example. The reference signal such as the DMRS and PTRS is used for demodulation of the DL data signal, and transmitted using the PDSCH.

<Random Access Procedure>

A random access procedure in NR is performed for various purposes such as an initial access, beam failure recovery, and handover. The random access procedure includes a contention based random access (CBRA) procedure and a contention free (non-contention based) random access (CFRA) procedure. The CBRA procedure is initiated spontaneously by UE 200, and thus a contention occurs in some cases by a plurality of UEs 200 initiating the random access procedure at the same time. Meanwhile, in the CFRA, the random access procedure can be performed so as not to cause a contention among a plurality of UEs 200 by gNB 100 indicating to the connecting UEs 200.

In NR, the random access procedure may be performed by selecting a synchronization signal (SS)/physical broadcast channel (PBCH) block, or the random access procedure may be performed by selecting a CSI-RS. The SS/PBCH block may be referred to as an SSB or a synchronization signal, and the CSI-RS may be referred to as a reference signal.

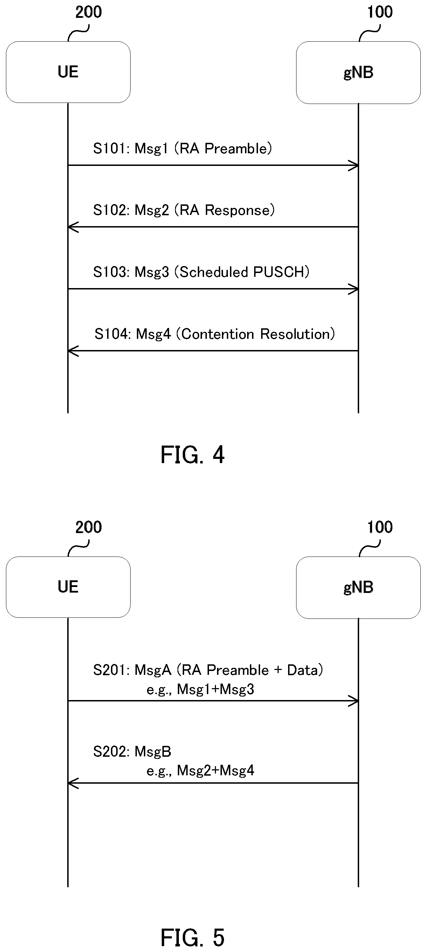

FIG. 4 is a sequence diagram illustrating an exemplary CBRA procedure.

gNB 100, for example, transmits an SSB for each beam, and UE 200 monitors the SSB for each beam. UE 200 selects an SSB with reference signal received power (RSRP) greater than a threshold (or equal to or greater than the threshold) from a plurality of SSBs, and transmits a random access preamble to gNB 100 via a PRACH using an RO associated with (corresponding to) the selected SSB (step S101). The random access preamble (sometimes abbreviated as an RA preamble) may be appropriately referred to as a preamble, a PRACH preamble, Message1, Msg1, or the like.

gNB 100 transmits a response message to Msg1 to UE 200 via a PDSCH as a second message (step S102). The response message (second message) may be appropriately referred to as a random access response (RAR), an RA response, Message2, Msg2, or the like. After transmitting Msg1, UE 200 may monitor a PDCCH used for scheduling of the PDSCH including Msg2. Msg2 may include a UL grant (RAR uplink grant) used for scheduling of a PUSCH including a third message to be transmitted by UE 200.

UE 200 transmits the PUSCH scheduled by the RAR uplink grant as the third message (step S103). For example, UE 200 transmits a radio resource control (RRC) connection request, an RRC connection reestablishment request, and the like to gNB 100 via the PUSCH. The third messaging may be appropriately referred to as Message3, Msg3, an RRC connection request, or the like.

gNB 100 transmits a contention resolution message via a PDSCH as a fourth message (step S104). The contention resolution message (fourth message) may be appropriately referred to as Message4, Msg4, or the like. After transmitting Msg3, UE 200 may monitor a PDCCH used for scheduling of the PDSCH including Msg4. Msg4 may include a contention resolution ID (UE contention resolution ID). The contention resolution ID may be used to resolve a contention caused by a plurality of UEs 200 transmitting signals using the same radio resource. When the contention resolution ID included in Msg4 received by UE 200 is the same as the ID for identifying that UE 200, UE 200 determines that the contention resolution has been successful, and may set the value of a temporary cell-radio network temporary identifier (TC-RNTI) in a cell-radio network temporary identifier (C-RNTI) field. When the value of the TC-RNTI is set in the C-RNTI field, UE 200 may assume that the RRC conection has been completed. Msg4 may be referred to as an RRC connection setup or the like.

To indicate to gNB 100 that the RRC connection has been completed, UE 200 with the RRC connection completed may transmit Ack (Acknowledgement) via a PUCCH (PUCCH resource) indicated by a PUCCH resource indication field included in the PDCCH that has scheduled Msg4. UE 200 may also transmit the UE capability to gNB 100 after the RRC connection establishment. The random access procedure described above may be referred to as a Type 1 RACH procedure, a 4-step RACH procedure, a Type 1 RACH, a 4-step RACH, or the like.

FIG. 5 is a sequence diagram illustrating another exemplary CBRA procedure.

UE 200 transmits a message including an RA preamble and data to gNB 100 (step S201). By way of example, UE 200 selects an RO in the same manner as the RO selection in the 4-step RACH procedure, and transmits the RA preamble using the RO and the data with a PUSCH resource associated with the RO. The message may be appropriately referred to as MessageA, MsgA, or the like. Note that the RA preamble and the data here may respectively correspond to Msg1 and Msg3 in the 4-step RACH procedure. In this procedure, a resource for transmitting data is not limited to a PUSCH resource, and may be a resource of any channel for transmitting data (or control information).

gNB 100 transmits a response message to UE 200 as a second message (step S202). The response message (second message) may be appropriately referred to as MessageB, MsgB, or the like. The contents included in MessageB may correspond to, for example, Msg2 and Msg4 in the 4-step RACH procedure.

UE 200 with the RRC connection completed may transmit Ack via a PUCCH (PUCCH resource) to indicate to gNB 100 that the RRC connection has been completed. UE 200 may also transmit the UE capability to gNB 100 after the RRC connection establishment. The random access procedure described above may be referred to as a Type 2 RACH procedure, a 2-step RACH procedure, a Type 2 RACH, a 2-step RACH, or the like.

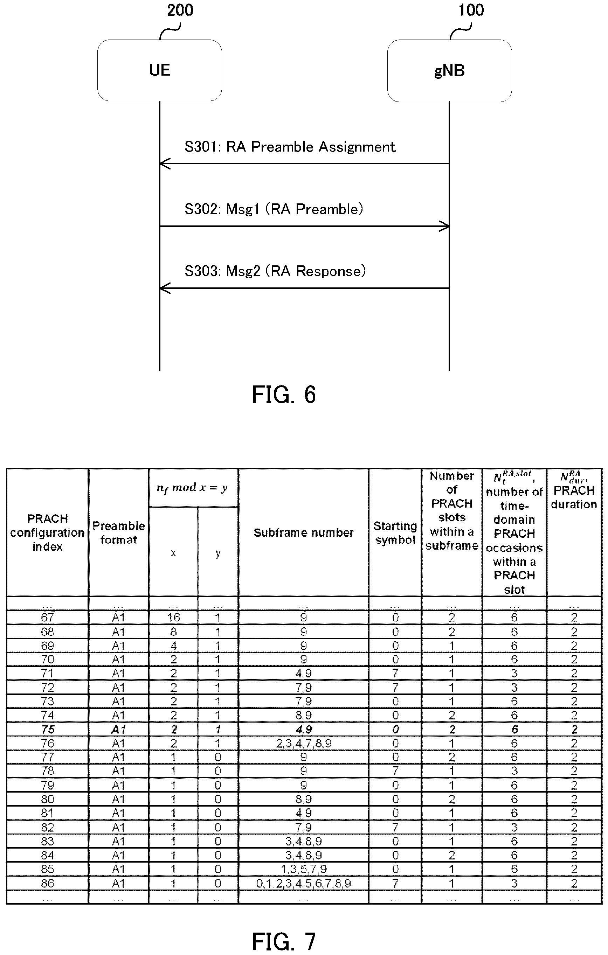

FIG. 6 is a sequence diagram illustrating an exemplary CFRA procedure.

UE 200 is requested from gNB 100 to transmit an RA preamble (Msg1). Here, gNB 100 assigns the RA preamble (Msg1) via dedicated signaling (step S301). The PDCCH for such dedicated signaling may be referred to as a PDCCH order. UE 200 may monitor the PDCCH (PDCCH order) for performing resource allocation for Msg1.

UE 200 transmits above-described Msg1 to gNB 100 (step S302).

gNB 100 transmits above-described Msg2 to UE 200 (step S303). UE 200 with the RRC connection completed may transmit Ack via a PUCCH (PUCCH resource) to indicate to gNB 100 that the RRC connection has been completed. UE 200 may also transmit the UE capability to gNB 100 after the RRC connection establishment.

In the present embodiment, for coverage enhancement in the random access procedure, UE 200 may repeatedly transmit Msg1 (and thus PRACH) in the 4-step RACH procedure illustrated in FIG. 4 and in the CFRA procedure illustrated in FIG. 6 described above, for example. Note that, in the present disclosure, Msg1 (and thus PRACH) may be repeatedly transmitted also in the 2-step RACH procedure illustrated in FIG. 5 described above.

<Study>

With regard to the PRACH transmission, Table 6.3.3.2-2/3/4 in NPL 1, for example, specifies a RACH occasion (RO) configuration (may be referred to as a random access configuration) for transmitting a PRACH. By way of example, FIG. 7 is a part of Table 6.3.3.2-3 described in NPL 1 illustrating an existing (conventional) random access configuration for FR1 and an unpaired spectrum.

Here, a description will be given of a configuration in which a PRACH configuration index illustrated in FIG. 7 determined by the information element (RRC parameter) °prach-ConfigurationIndex" in SIB1 is 75, as an example.

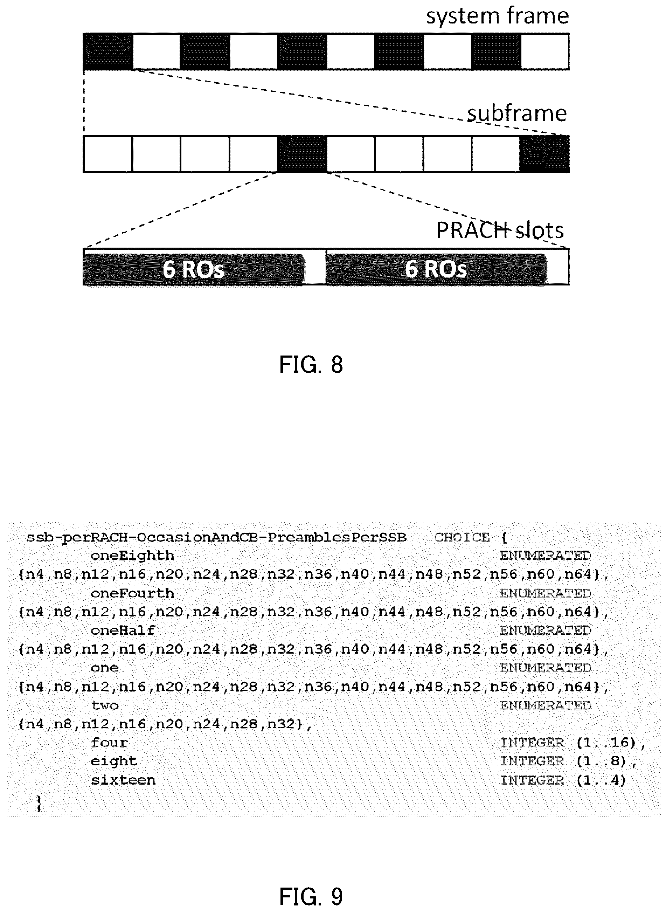

When the PRACH configuration index is 75, A1 is specified as a PRACH preamble format (may be referred to as a PRACH format, a preamble format, etc). As indicated by "$n_f$ mod x (= 2) = y (= 1)", where $n_f$ represents a system frame number (SFN), ROs are mapped in system frames with odd system frame numbers, and no RO is mapped in system frames with even system frame numbers. The ROs are mapped in subframes with subframe numbers 4 and 9, and the starting symbol of the ROs is 0. Further, as indicated by "Number of PRACH slots within a subframe", 2 PRACH slots are included in a single subframe, and as indicated by "$N_t^{RA,slot}$, number of time-domain PRACH occasions within a PRACH slot" and "$N_{dur}^{PA}$, PRACH duration", 6 ROs are included in a single PRACH slot and each RO has 2 symbols. Note that the number of symbols for each RO being 2 is associated with the PRACH preamble format being A1. This is schematically illustrated in FIG. 8.

Further, with regard to the PRACH transmission, a relation between the SSB and RO is specified in "8.1 Random access preamble" in NPL 2, for example. FIG. 9 illustrates the information element "ssb-perRACH-OccasionAndCB-PreamblesPerSSB" specifying the relation between the SSB and RO. Note that the information element "ssb-perRACH-OccasionAndCB-PreamblesPerSSB" is included in the information element "RACH-ConfigCommon".

The information element "ssb-perRACH-OccasionAndCB-PreamblesPerSSB" includes two meanings. The "CHOICE" section indicates the number of SSBs (indices) per RO (the number of beams). For example, the value "oneEight" indicates that a single SSB is associated with 8 ROs, the value "oneFourth" indicates that a single SSB is associated with 4 ROs, and so forth. The "ENUMERATED" section indicates the number of available preambles (preambles in CBRA) per SSB (index) (per valid RO). For example, the value "n4" represents that a single SSB is associated with 4 preambles, the value "n8" represents that a single SSB is associated with 8 preambles, and so forth.

In addition, with regard to the PRACH transmission, an association period and an association pattern period are defined in "8.1 Random access preamble" of NPL 2, for example.

The association period is a period for mapping (associating) the SSB to the RO, and is a period obtained by repeating the PRACH configuration period given by x (system frame number) illustrated in FIG. 7 a minimum predetermined times so that $N_{TX}^{SSB}$ (all) SSBs (indices) obtained from the information element "ssb-PositionInBurst" in SIB1 or the information element "ssb-PositionInBurst" in the information element "ServingCellConfigCommon" are mapped to the ROs at least once in the association period. Note that the PRACH configuration period is 10 milliseconds (x = 1), 20 milliseconds (x = 2), 40 milliseconds (x = 4), 80 milliseconds (x = 8), or 160 milliseconds (x = 16).

The association pattern period is a period including one or more association periods, and is a period determined so that the pattern between the RO and the SSB is repeated every 160 milliseconds at the most.

Further, with regard to the PRACH transmission, Table 6.3.3.1-1 of NPL 1, for example, illustrates a PRACH preamble format in a case where a PRACH preamble sequence length is 839 (long sequence). Likewise, Table 6.3.3.1-2 of NPL 1, for example, illustrates a PRACH preamble format in a case where a PRACH preamble sequence length is 139 (short sequence) and the like. For example, Table 6.3.3.2-1 of NPL 1 illustrates a relation between the PRACH preamble sequence length and PRACH SCS.

In order to achieve coverage enhancement in the random access procedure, in a case where a PRACH is repeatedly transmitted according to the existing random access configuration illustrated in FIG. 7, for example, inappropriate control of the PRACH repetition may cause a contention between PRACH initial transmission (may be referred to as first-time transmission, first transmission, etc.) and the PRACH repetition; accordingly, the communication quality is possibly deteriorated. A specific operation for preventing or avoiding such a contention, however, has not yet been specified. Further, when the PRACH repetition is unnecessarily performed, a resource will be used in vain, thereby causing a problem of resource efficiency.

In order to prevent or avoid such a contention, it is conceivable to support an additional resource (e.g., additional RO) for the PRACH repetition. Nothing has been specified, however, as to whether to increase a (additional) resource for the PRACH repetition, and in a case of increasing the resource, how to increase the additional resource.

Although there are provisions as illustrated in FIG. 7 and FIG. 8, for example, the following points are not specified at all in a case of increasing a (additional) resource.

(1-1) How to define the additional resource (and/or a configuration on the additional resource, and/or a configuration on a PRACH sequence transmitted in the additional resource)

(1-2) Whether to use the additional resource (and/or a configuration on the additional resource, and/or a configuration on a PRACH sequence transmitted in the additional resource)

(1-3) Available resource for the additional resource

In addition, although there is a provision as illustrated in FIG. 9 and the above-described provision for the PRACH preamble sequence length, for example, the following point is not specified at all in a case of not increasing a (additional) resource.

(1-4) Whether to increase the number of available preambles per RO without increasing the RO, and in a case of increasing the number of available preambles, how to increase the number of available preambles

Meanwhile, in a case of not supporting the additional resource for PRACH repetition (in a case of performing the PRACH initial transmission and PRACH repetition in an existing (same) RO), the following point is not specified at all.

(2-1) Whether to explicitly prevent or avoid a contention between PRACH initial transmission and PRACH repetition in an existing RO, and in a case of explicitly preventing or avoiding the contention, how to explicitly prevent or avoid the contention

With this regard, descriptions will be given in the following on Solutions 1, 2, 3, 4, and 5 for the respective points (1-1), (1-2), (1-3), (1-4), and (2-1). Note that the following descriptions are mainly about the CBRA procedure (e.g., random access procedure during initial access) unless otherwise specified, but the present disclosure is also applicable to a random access procedure other than the CBRA procedure (CFRA procedure). In addition, the following descriptions are mainly about PRACH repetition using the same beam as that for an SSB unless otherwise specified, but the present disclosure is similarly applicable to PRACH repetition using a beam different from that for an SSB.

<Solution 1>

First, a solution will be described as to "(1-1) How to define the additional resource for PRACH repetition (and/or a configuration on the additional resource, and/or a configuration on a PRACH sequence transmitted in the additional resource)". Note that, in the following description including Solution 1, PRACH initial transmission may be performed in the same manner as in 3GPP Release 15, 16, or 17 including the random access configuration (RO configuration) described with reference to FIG. 7, unless otherwise specified.

[Proposal P1-1]

In Proposal P1-1, an additional RO for PRACH repetition may be defined by reusing the existing RO configuration illustrated in FIG. 7. Specifically, in Proposal P1-1, an additional "PRACH configuration index" for the additional RO, which is different from a PRACH configuration index for PRACH initial transmission, may be configured, indicated, or instructed by gNB 100 to UE 200. Note that the "PRACH configuration index" may be referred to as "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like.

*Option 1

In Option 1, the additional PRACH configuration index may be configured, indicated, or instructed in at least one of the following.

**Option 1-1

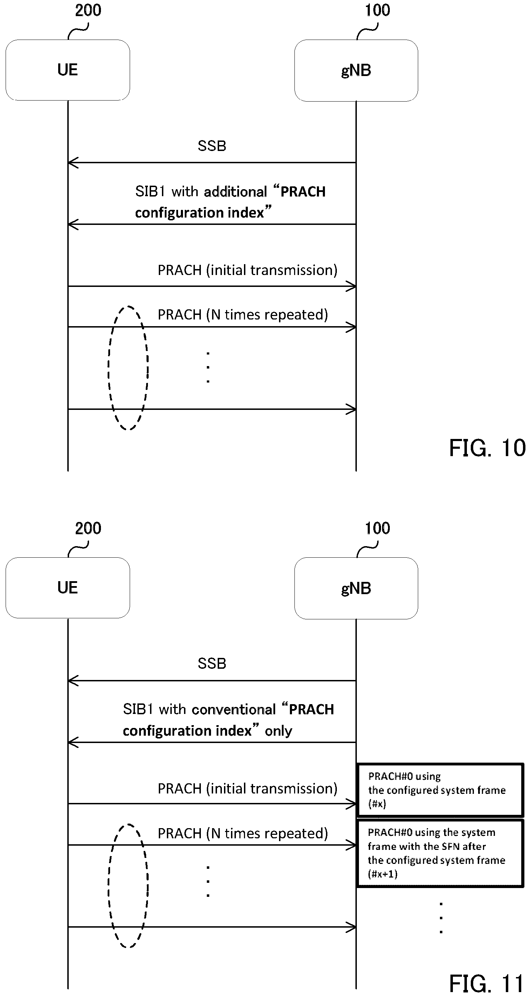

The additional PRACH configuration index may be configured, indicated, or instructed in SIB1 (e.g., in information element "RACH-ConfigGeneric") by gNB 100 after an SSB is transmitted as illustrated in FIG. 10, or may be configured, indicated, or instructed in other system information such as S1B2.

**Option 1-2

The additional PRACH configuration index may be configured, indicated, or instructed by gNB 100 in a dedicated RRC configuration (e.g., in information element "RACH-ConfigDedicated"). Note that the RRC configuration may be appropriately referred to as RRC signaling, an RRC message, an RRC parameter, or simply an RRC.

**Option 1-3

The additional PRACH configuration index may be configured, indicated, or instructed by gNB 100 in a PDCCH that schedules a RAR (Msg2).

**Option 1-4

The additional PRACH configuration index may be configured, indicated, or instructed by gNB 100 in a PDSCH including a RAR (Msg2).

*Option 2

In Option 2, the number of additional PRACH configuration indices configured, indicated, or instructed for PRACH repetition as proposed in Option 1 may be the following numbers.

**Option 2-1

The number of additional PRACH configuration indices may be the same as the number of PRACH repetitions (e.g., "N" illustrated in FIG. 10). That is, the additional PRACH configuration indices for the respective transmissions in the PRACH repetition may be configured, indicated, or instructed as described in the above Option 1. The additional PRACH configuration indices may be different for each transmission in the PRACH repetition, or may be the same for at least some of the transmissions in the PRACH repetition. Note that, PRACH initial transmission is not included in PRACH repetition in the description of the present application, but PRACH initial transmission may be included in PRACH repetition. In a case where PRACH initial transmission is not included in PRACH repetition, the number of additional PRACH configuration indices may be the same as the number obtained by subtracting 1 from the number of PRACH repetitions. This Option 2-1 allows a flexible random access configuration for each transmission in PRACH repetition.

**Option 2-2

The additional PRACH configuration index may be the same for all transmissions in the PRACH repetition. That is, the number of additional PRACH configuration index may be one. Thus, in this case, a total of two PRACH configuration indices, which are a PRACH configuration index for the PRACH initial transmission and a PRACH configuration index for all transmissions in the PRACH repetition, may be configured, indicated, or instructed as described in the above Option 1. This Option 2-2 prevents an increase in the amount of signaling related to the random access configuration.

*Option 3

In Option 3, the PRACH configuration index for the PRACH repetition may be limited so as to meet a predetermined condition described below.

**Option 3-1

The additional PRACH configuration index may be configured, indicated, or instructed by gNB 100 so that the RO configured for the PRACH repetition does not (completely) overlap, i.e., is different from, the RO configured by the PRACH configuration index for the PRACH initial transmission, which is the predetermined condition. This Option 3-1 makes it possible to avoid a contention between the PRACH initial transmission and the PRACH repetition.

In Proposal P1-1, UE 200 may receive a PRACH configuration index for PRACH initial transmission (first information on a first resource for transmitting a random access channel) from gNB 100. UE 200 may receive the above-described number of additional PRACH configuration indices for PRACH repetition (second information on a second resource that is for transmitting the random access channel and at least partially different from the first resource) from gNB 100. UE 200 may configure (determine) the RO (resource) for the PRACH initial transmission and the additional RO for the PRACH repetition that is different from the RO for the initial transmission, based on the received PRACH configuration indices. To be more specific, UE 200 may configure (determine) the PRACH preamble format and ROs in the table illustrated in FIG. 7 corresponding to the received PRACH configuration index and additional PRACH configuration indices. Then, UE 200 may perform the PRACH initial transmission to gNB 100 using the configured (determined) RO, and perform the PRACH repetition to gNB 100 using the configured (determined) additional RO.

As described above, according to Options 1 to 3 of Proposal P1-1, the RO for PRACH initial transmission and the RO for PRACH repetition do not overlap at least partially (are different at least partially), thereby preventing or avoiding a contention between the PRACH initial transmission and the PRACH repetition. Thus, the PRACH repetition can be appropriately performed in the random access procedure.

[Proposal P1-2]

In Proposal P1-2, an additional RO for the PRACH repetition may be defined in association with the existing (conventional) RO configuration illustrated in FIG. 7. To be more specific, in Proposal P1-2, the additional RO may be defined based on a configured RO by following a predetermined rule. In Proposal P1-2, the additional PRACH configuration index for the additional RO proposed in the above Proposal P1-1 is not necessary.

*Option 1

In Option 1, the "configured RO" described above may be as follows.

**Option 1-1

The above "configured RO" may be an RO configured by a PRACH configuration index for initial transmission (information element °prach-ConfigurationIndex" in SIB1) illustrated in FIG. 11. Note that the term "conventional" in FIG. 11 may be used for initial transmission.

*Option 2

In Option 2, the "predetermined rule" may be at least one of the following.

**Option 2-1

One or more system frames that are different from a system frame configured by the PRACH configuration index for the initial transmission may be fixedly configured (determined or selected) based on the above configured system frame. This is the predetermined rule. The one or more system frames to be fixedly configured here are different from the system frame configured for the initial transmission, but subframes (subframe numbers and positions in the system frame) and PRACH slots (slot numbers and positions in the subframe) in the one or more system frames to be configured may be the same as subframes (subframe numbers and positions in the system frame) and PRACH slots (slot numbers and positions in the subframe) configured for the initial transmission. For example, as illustrated in FIG. 11, the one or more system frames to be fixedly configured may be system frames after (e.g., immediately after) the system frame configured for the initial transmission. Alternatively, the one or more system frames to be configured may be system frames before (e.g., immediately before) the system frame configured for the initial transmission. UE 200 may repeatedly transmit a PRACH using such fixed system frames, i.e., using PRACH slots in subframes in the system frames.

**Option 2-2

One or more subframes that are different from a subframe configured by the PRACH configuration index for the initial transmission may be fixedly configured (determined or selected) based on the above configured subframe. This is the predetermined rule. The one or more subframes to be fixedly configured here may be other subframes in a (same) system frame configured for the initial transmission, and PRACH slots (slot numbers and positions in the subframe) configured in the one or more system frames to be selected may be the same as PRACH slots (slot numbers and positions in the subframe) configured for the initial transmission. For example, as in the above Option 2-1, the one or more subframes to be configured may be subframes before (e.g., immediately before) or after (e.g. immediately after) the subframe configured for the initial transmission. UE 200 may repeatedly transmit a PRACH using such fixed subframes (in the system frame), i.e., using PRACH slots in such subframes.

**Option 2-3

PRACH slots that are different from a PRACH slot configured by the PRACH configuration index for the initial transmission may be fixedly configured (determined or selected) based on the above configured PRACH slot. This is the predetermined rule. The PRACH slots to be fixedly configured here may be other PRACH slots in a (same) subframe in a (same) system frame configured for the initial transmission. UE 200 may repeatedly transmit a PRACH using such fixed PRACH slots (in the subframe in the system frame).

**Option 2-4

The above "predetermined rule" may be any combinations of Options 2-1 to 2-3 described above. By way of example, one or more system frames that are different from a system frame configured by the PRACH configuration index for the initial transmission and one or more subframes that are different from a subframe configured by the PRACH configuration index may be fixedly configured (determined or selected), and PRACH slots may be the same as the PRACH slots configured for the initial transmission in terms of the slot numbers (positions in the subframe). In this case, UE 200 may repeatedly transmit a PRACH using the PRACH slots in the fixed subframes in the fixed system frames. As another example, one or more subframes that are different from a subframe configured by the PRACH configuration index for the initial transmission and PRACH slots that are different from PRACH slots configured by the PRACH configuration index may be fixedly configured (determined or selected), and the system frame may be the system frame configured for the initial transmission. UE 200 may repeatedly transmit a PRACH using the fixed PRACH slots in fixed subframes in the system frame.

Note that, in the above description, the PRACH repetition may be sometimes performed temporally prior to the system frame etc. configured by the conventional PRACH configuration index, but even in such a case, transmitting a PRACH using an RO configured by the conventional PRACH configuration index is referred to as the PRACH initial transmission for convenience in the present disclosure. The PRACH initial transmission may be referred to as initial PRACH transmission, PRACH conventional transmission, conventional PRACH transmission, PRACH existing transmission, existing PRACH transmission, etc. Additionally, the PRACH repetition may be referred to as PRACH repeated transmission, repeated PRACH transmission, PRACH additional transmission, additional PRACH transmission, etc.

In summary, a system frame, subframes in the system frame, and slots in the subframes for the PRACH initial transmission may be respectively different in the system frame number, subframe numbers, and slot numbers from at least one of a corresponding system frame, corresponding subframes in the system frame, and corresponding slots in the subframe for PRACH repetition.

As described above, in the configuration (determination or selection) of the "additional RO" under the "predetermined rule" in Option 2, it is possible to exclude the RO (resource) configured by the PRACH configuration index for the PRACH initial transmission (information element "prach-ConfigurationIndex" in SIB1).

*Option 3

In Option 3, the additional RO for PRACH repetition may be defined according to the following.

**Option 3-1

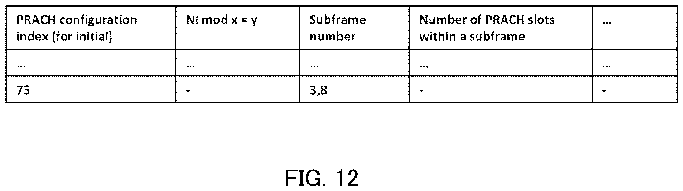

The additional RO for PRACH repetition may be defined by defining a new table for expanding the existing RO configuration illustrated in FIG. 7 and associating the new table with the existing RO configuration illustrated in FIG. 7. FIG. 12 is a new table for a random access configuration for PRACH repetition according to an embodiment of the present disclosure. The table may include only some rows of the table illustrated in FIG. 7. The table illustrated in FIG. 12 and the table illustrated in FIG. 7 are associated with each other by linking the "PRACH configuration index (for initial)" field illustrated in FIG. 12 and the "PRACH configuration index" field illustrated in FIG. 7. Note that, in FIG. 12, the symbol "-" indicates that the value there is the same as in the corresponding field of the table illustrated in FIG. 7. To be more specific, in a case where the PRACH configuration index for initial transmission is 75, the row with the PRACH configuration index of 75 is referred to in the table illustrated in FIG. 7 for the RO configuration for repetition. In the table illustrated in FIG. 12, in the case where the PRACH configuration index for the initial transmission is 75, subframes with subframe numbers 3 and 8 are configured (determined or selected) for the additional RO, unlike the RO configuration for the initial transmission illustrated in FIG. 7. Although the above example corresponds to Option 2-2 of Proposal P1-2 described above, configurations corresponding to Option 2-1, Option 2-2 and/or Option 2-3 of Proposal P1-2 described above may be reflected in a table as illustrated in FIG. 12. As described above, in a case where a PRACH configuration index for initial transmission is configured, the table illustrated in FIG. 12 defines in advance whether an additional RO for repetition corresponding to the PRACH configuration index is present, and if present, where the additional RO for the repetition is. Thus, in the case where a PRACH configuration index for initial transmission is configured, UE 200 can refer to the table illustrated in FIG. 7 and the table illustrated in FIG. 12 to confirm the configuration of the additional RO for repetition corresponding to the PRACH configuration index. Note that, in the case where the value in the table illustrated in FIG. 12 is the same as the value in the corresponding field of the table illustrated in FIG. 7, the same value may be written in the table instead of omitting the value. In this case, UE 200 only needs to refer to the table illustrated in FIG. 12 to confirm the additional RO for repetition.

In Proposal P1-2, UE 200 may receive a PRACH configuration index for PRACH initial transmission (first information on a first resource for transmitting a random access channel) from gNB 100. UE 200 may configure (determine) an RO (resource) for the PRACH initial transmission (a first system frame, a subframe in the first system frame, and a first slot in the first subframe) based on the received PRACH configuration index. UE 200 may configure (determine) an RO (resource) that is used for PRACH repetition and is at least partially different in a frame number, subframe number, and slot number from the resource used for the PRACH initial transmission (a second system frame, a subframe in the second system frame, and a second slot in the second subframe), based on the received PRACH configuration index (second information on a second resource that is for transmitting the random access channel and at least partially different from the first resource). Then, UE 200 may perform the PRACH initial transmission to gNB 100 using the configured (determined) RO, and perform the PRACH repetition to gNB 100 using the configured (determined) RO.

As described above, according to Options 1 to 3 of Proposal P1-2, the RO for PRACH initial transmission and the RO for PRACH repetition do not overlap at least partially (are different at least partially), thereby preventing or avoiding a contention between the contention PRACH initial transmission and the PRACH repetition. Thus, the PRACH repetition can be appropriately performed in the random access procedure. Further, Options 1 to 3 of Proposal P1-2 eliminates the need for an additional PRACH configuration index for an additional RO, thereby preventing an increase in the amount of signaling.

[Proposal P1-3]

In Proposal P1-3, a predetermined RO or information on a resource for transmitting a PRACH may be configured, indicated, or instructed by gNB 100 to UE 200 according to a method other than the above-described RO configuration (resource configuration). To be more specific, in Proposal P1-3, a predetermined PRACH, which is not necessarily for repetition, may be transmitted by UE 200 according to a dynamic indication or instruction including information on PRACH transmission from gNB 100 to make the configuration different from a resource configuration, for example, configured for PRACH initial transmission. Note that the "information on PRACH transmission" may be referred to as "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like.

*Option 1

In Option 1, following the "dynamic indication or instruction" described above may be at least one of the following.

**Option 1-1

Following the "dynamic indication or instruction" described above may be following a "PDCCH (DCI)":

**Option 1-2

Following the "dynamic indication or instruction" described above may be following a "medium access control-control element (MAC-CE)".

*Option 2

In Option 2, the "information on PRACH transmission" described above may be at least one of the following.

**Option 2-1

The "information on PRACH transmission" described above may be (information indicating) a time resource and/or a frequency resource to be used for PRACH transmission.

**Option 2-2

The "information on PRACH transmission" described above may be (information indicating) a PRACH preamble format.

**Option 2-3

The "information on PRACH transmission" described above may be (information indicating) a cyclic shift index.

**Option 2-4

The "information on PRACH transmission" described above may be (information indicating) a root sequence index.

**Option 2-5

The "information on PRACH transmission" described above may be (information indicating) a preamble index and/or a preamble group.

*Option 2'

In Option 2', in a case where some of the information in the above Option 2 is not dynamically indicated or instructed, the following may be applied.

**Option 2'-1

In the case where some of the information in the above Option 2 is not dynamically indicated or instructed, the corresponding information configured for PRACH initial transmission (e.g., configured by a PRACH configuration index) may be reused. For example, in a case where a PRACH preamble format is not dynamically indicated or instructed, the PRACH preamble format configured by the PRACH configuration index illustrated in FIG. 7 may be used.

*Option 3

In Option 3, Proposal P1-3 (PRACH transmission according to the dynamic indication or instruction) may be applied in the limited cases to be described below.

**Option 3-1

Proposal P1-3 may be applied to PRACH repetition. A PRACH may be repeatedly transmitted by UE 200 according to the dynamic indication or instruction.

**Option 3-2

Proposal P1-3 may be applied to a random access initiated by a PDCCH (PDCCH-order random access). For example, a PRACH may be transmitted by UE 200 according to the dynamic indication or instruction in the PDCCD-order random access, which is exemplified in but not limited to FIG. 6.

**Option 3-3

Proposal P1-3 may be applied to a CFRA. For example, a PRACH may be transmitted by UE 200 according to the dynamic indication or instruction in the CFRA, which is exemplified in but not limited to FIG. 6.

In Proposal P1-3, an additional RO need not be defined for an additional transmission (i.e., repetition) of a PRACH.

In Proposal P1-3 (Option 3-1), UE 200 may receive a PRACH configuration index for PRACH initial transmission (first information on a first resource for transmitting a random access channel) from gNB 100. UE 200 may configure (determine) a resource for the PRACH initial transmission based on the received PRACH configuration index. UE 200 may receive a dynamic indication or instruction including information on PRACH transmission (second information on a second resource that is for transmitting the random access channel and at least partially different from the first resource) from gNB 100. UE 200 may configure (determine) a resource for PRACH repetition that is different from the resource for the PRACH initial transmission, based on the received dynamic indication or instruction including the information on PRACH transmission. Then, UE 200 may perform the PRACH initial transmission to gNB 100 using the configured (determined) resource, and perform the PRACH repetition to gNB 100 using the configured (determined) resource.

As described above, according to Options 1 to 3 (3-1) of Proposal P1-3, a resource configured for PRACH initial transmission or a configuration on the resource and a resource configured for PRACH repetition or a configuration on the resource do not overlap at least partially (are different at least partially), thereby preventing or avoiding a contention between the PRACH initial transmission and the PRACH repetition. Thus, the PRACH repetition can be appropriately performed in the random access procedure. Further, according to Options 1 to 3 (3-1) of Proposal P1-3, fewer changes to the specification and device implementation are necessary unless an additional RO is defined for the PRACH repetition.

<Solution 2>

Next, a solution is described as to "(1-2) Whether to use the additional resource for PRACH repetition (and/or a configuration on the additional resource, and/or a configuration on a PRACH sequence transmitted in the additional resource)".

[Proposal P2-1]

In Proposal P2-1, whether to use an additional resource for PRACH repetition (and/or a configuration on the additional resource), i.e., whether to trigger PRACH repetition, may be determined (decided or judged) by gNB 100. To be more specific, in Proposal P2-1, whether to use an additional resource for PRACH repetition may be determined by gNB 100 and may be configured, indicated, or instructed to UE 200 by gNB 200. Note that the expression "whether to use the additional resource (and/or a configuration on the additional resource, and/or a configuration on a PRACH sequence transmitted in the additional resource)" may mean the expression "whether to perform PRACH repetition".

*Option 1

In Option 1, whether to perform PRACH repetition may be determined based on at least one of the following.

**Option 1-1

gNB 100 may determine whether to perform PRACH repetition based on a previous PRACH preamble format and/or RO configuration. The previous PRACH preamble format and/or RO configuration may be a PRACH preamble format and/or RO configuration used in the previous one or more PRACH transmissions (e.g., initial transmission) by UE 200, or may be a PRACH preamble format and/or RO configuration configured via SIB1. Herein, the RO configuration may be, for example, the information element "prach-ConfigurationIndex"; the information element "zeroCorrelationZone-Config", or both of them. For example, when the previous PRACH preamble format and/or RO configuration imply that PRACH repetition is necessary, gNB 100 may determine to perform PRACH repetition. Note that those information elements (RRC parameters) may be referred to as "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like.

**Option 1-2

gNB 100 may determine whether to perform PRACH repetition based on the received power (RSRP) of a previously received PRACH. For example, gNB 100 may determine to perform PRACH repetition when the received power of the previously received PRACH (e.g., received PRACH initially transmitted by UE 200) is less than a threshold (or equal to or less than the threshold).

Noted that the above Option 1 can depend on the implementation of the gNB.

*Option 2

In Option 2, whether to perform PRACH repetition may be configured, indicated, or instructed to UE 200 by gNB 100 according to any of the following.

**Option 2-1

gNB 100 may configure, indicate, or instruct to UE 200 whether to perform PRACH repetition by a PDCCH. Such a PDCCH may be a PDCCH indicating a random access (PDCCH order), a PDCCH scheduling an RAR, and/or a PDCCH scheduling one or more DL or UL shared channels (general PDCCH).

**Option 2-2

gNB 100 may configure, indicate, or instruct to UE 200 whether to perform PRACH repetition by a MAC-CE. Such a MAC-CE may be a MAC-CE included in a PDSCH including an RAR and/or a MAC-CE included in a PDSCH including a DL shared channel (DL-SCH).

**Option 2-3

gNB 100 may configure, indicate, or instruct to UE 200 whether to perform PRACH repetition by system information. Such system information may be any SIB, such as SIB1 and SIB2.

**Option 2-4

gNB 100 may configure, indicate, or instruct to UE 200 whether to perform PRACH repetition by an RRC configuration.

**Option 2-5

gNB 100 may configure, indicate, or instruct to UE 200 whether to perform PRACH repetition by any combinations of Options 2-1 to 2-5 described above.

In Proposal P2-1, UE 200 receives, from gNB 100, information regarding whether to perform PRACH repetition, and when performing the PRACH repetition, UE 200 may configure (determine) an additional RO or additional resource according to Proposals P1-1 to P1-3 described above, for example, and perform the PRACH repetition to gNB 100 using the configured (determined) additional RO or additional resource.

As described above, according to Options 1 and 2 of Proposal P2-1, the PRACH repetition is performed only when coverage enhancement (PRACH repetition) is assumed to be necessary. This prevents or avoids unnecessary use of resources, which is advantageous in terms of the resource efficiency. Thus, the PRACH repetition can be appropriately performed in the random access procedure. Further, when an additional RO or additional resource is configured (determined) according to the above-described Proposals P1-1 to P1-3, for example, a resource for PRACH initial transmission and a resource for PRACH repetition do not overlap at least partially, thereby preventing or avoiding a contention between the contention PRACH initial transmission and the PRACH repetition.

[Proposal P2-2]

In Proposal P2-2, whether to use a configuration on the additional resource for PRACH repetition (and/or the additional resource) may be determined (decided or judged) by UE 200.

*Option 1

In Option 1, whether to perform PRACH repetition may be implicitly determined by UE 200 based on at least one of the following predetermined conditions for determining whether coverage enhancement (PRACH repetition) is necessary.

**Option 1-1

UE 200 may implicitly determine whether to perform PRACH repetition based on the received power (RSRP) of a received SSB. For example, UE 200 may implicitly determine to perform PRACH repetition when the received power of a received SSB is less than a threshold (or equal to or less than the threshold), which is the predetermined condition.

**Option 1-2

UE 200 may implicitly determine whether to perform PRACH repetition based on an RO configuration. For example, UE 200 may implicitly determine to perform PRACH repetition based on one or more of a PRACH configuration index, a PRACH preamble format, the number of ROs in a PRACH slot, the information element "zeroCorrelationZoneConfig", etc. UE 200 may implicitly determine to perform PRACH repetition, for example, when a predetermined PRACH configuration index (implying the need for PRACH repetition) is configured, which is the predetermined condition, when a predetermined PRACH preamble format (implying the need for PRACH repetition) is configured, which is another predetermined condition, and/or when the number of ROs in a PRACH slot is greater than (or equal to or greater than) a threshold, which is still another predetermined condition. Additionally or alternatively, UE 200 may implicitly determine to perform PRACH repetition when a cell is considered to be somewhat broad based on the value of the information element "zeroCorrelationZoneConfig" (e.g., when the value of the information element "zeroCorrelationZoneConfig" is greater than (or equal to or greater than) a threshold), which is another predetermined condition, since the information element "zeroCorrelationZoneConfig" is considered to be an indicator of the cell size. The above-described PRACH configuration index, PRACH preamble format, number of ROs in a PRACH slot, information element "zeroCorrelationZoneConfig", and the like may be referred to as "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like. Further, the predetermined condition may be referred to as a "condition on a resource configuration for transmitting a random access channel", for example.

**Option 1-3

UE 200 may implicitly determine whether to perform PRACH repetition based on the purpose and/or type of the random access procedure. For example, UE 200 may implicitly determine to perform PRACH repetition based on a CBRA, a CFRA, a 4-step RACH, a 2-step RACH, a random access procedure initiated by a PDCCH (order)/MAC (entity)/RRC, a random access for a system information request/recovery of a beam failure on an SpCell/an RRC reconfiguration in a synchronized state, etc. For example, when the random access does not follow the 2-step RACH, which is the predetermined condition, UE 200 may implicitly determine to perform PRACH repetition. More generally, for example, when the purpose and/or type of the random access procedure is a predetermined purpose and/or type, which is the predetermined condition, UE 200 may implicitly determine to perform PRACH repetition.

**Option 1-4

UE 200 may implicitly determine whether to perform PRACH repetition based on the RAR window duration for receiving an RAR. For example, UE 200 may implicitly determine to perform PRACH repetition when the RAR window duration is greater than a threshold (or equal to or greater than the threshold), which is the predetermined condition. The predetermined condition may be referred to as a "condition regarding a response message to a random access channel" or the like.

**Option 1-5

UE 200 may implicitly determine whether to perform PRACH repetition based on whether an RAR has been received within an RAR window. UE 200 may implicitly determine to perform PRACH repetition when, for example, not receiving an RAR within the RAR window, which is the predetermined condition. The predetermined condition may be referred to as a "condition regarding a response message to a random access channel" or the like.

Note that, in these Options 1-1 to 1-5, the criteria for the determination in Options 1-1 and 1-2 of Proposal P2-1 described above and/or the configuration, indication, or instruction in Options 2-1 to 2-5 of Proposal P2-1 described above may be referred to as criteria and/or a configuration, indication, or instruction for UE 200 to determine, consider, or assume whether to use an additional resource.

*Option 2

In a case where UE 200 determines to perform PRACH repetition in Option 1 of Proposal P2-2 described above, UE 200 may be at least one of the following in Option 2 and may follow a configuration, indication, or instruction dedicated to the PRACH repetition from gNB 100.

**Option 2-1

The maximum number of PRACH transmissions may be configured, indicated, or instructed to UE 200 by gNB 100, and UE 200 may repeatedly transmit a PRACH based on the maximum number. Note that the maximum number of PRACH transmissions may be configured, indicated, or instructed to UE 200 by system information such as SIB1, an RRC, a MAC-CE, and/or a DCI.

**Option 2-2

An additional RO or additional resource for a PRACH may be configured, indicated, or instructed by gNB 100 to UE 200. UE 200 may repeatedly transmit the PRACH using the additional RO or additional resource. Note that additional RO or additional resource may be defined, configured, indicated, or instructed as suggested in any of the above Proposals P1-1 to P1-3.

Note that, in these Options 2-1 and 2-2, the criteria for the determination in Options 1-1 and 1-2 of Proposal P2-1 described above and/or the configuration, indication, or instruction in Options 2-1 to 2-5 of Proposal P2-1 described above may be referred to as criteria and/or a configuration, indication, or instruction for UE 200 to determine, consider, or assume whether to use the additional resource.

In Proposal P2-2, UE 200 may determine whether to perform PRACH repetition based on a predetermined condition. For example, UE 200 may determine to perform PRACH repetition on the assumption that the PRACH repetition is necessary when the predetermined condition described above is satisfied. Upon the determination, UE 200 may repeatedly transmit a PRACH to gNB 100 according to a configuration, indication, or instruction from gNB 100. To be more specific, UE 200 may repeatedly transmit the PRACH to gNB 100 based on the maximum number of PRACH repetitions and/or the additional RO or additional resource for the PRACH repetition that are configured, indicated, or instructed by gNB 100. The maximum number of PRACH repetitions and/or the additional RO or additional resource for the PRACH repetition may be referred to as a configuration, indication, or instruction, etc. on PRACH repetition.

As described above, according to Options 1 and 2 of Proposal P2-2, the PRACH repetition is performed only when coverage enhancement (PRACH repetition) is assumed to be necessary based on a predetermined condition. This prevents or avoids unnecessary use of resources, which is advantageous in terms of the resource efficiency. Thus, the PRACH repetition can be appropriately performed in the random access procedure.

<Solution 3>

Next, a solution is described as to "(1-3) Available resource for the additional resource for PRACH repetition".

[Proposal P3-1]

In Proposal P3-1, the additional resource for PRACH repetition may be configured (determined) by considering a predetermined configuration. To be more specific, in Proposal P3-1, the additional resource for PRACH repetition may be configured by considering a configuration on another signal and/or channel as the predetermined configuration. Note that this configuration may be performed by gNB 100.

*Option 1

In Option 1, the above "configuration on another signal and/or channel" may be at least one of the following. The "(information indicating the) configuration on another signal and/or channel" may be referred to as "configuration information of a signal and/or channel other than a random access channel", "information on a configuration of a signal and/or channel other than a random access channel", and the like.

**Option 1-1

The above "configuration on another signal and/or channel" may be a configuration on a symbol structure in time division duplex (TDD). To be more specific, the above "configuration on another signal and/or channel" may be the information element "tdd-UL-DL-ConfigurationCommon" and/or the information element "tdd-UL-DL-ConfigurationDedicated". For example, the additional resource for PRACH repetition may be configured (determined) so as not to include a downlink symbol and/or a flexible symbol configured in the information element "tdd-UL-DL-ConfigurationCommon" and/or the information element "tdd-UL-DL-ConfigurationDedicated". By way of example, the additional resource for PRACH repetition may be configured (determined) so as not to include at least the downlink symbol configured in the information element "tdd-UL-DL-ConfigurationCommon" and/or the information element "tdd-UL-DL-ConfigurationDedicated". This makes it possible to avoid an overlap with a symbol used in downlink. The information element "tdd-UL-DL-ConfigurationCommon" and/or the information element "tdd-UL-DL-ConfigurationDedicated" may be referred to as "symbol configuration information", "information on a symbol configuration", and the like.

**Option 1-2

The above "configuration on another signal and/or channel" may be a configuration on an SSB symbol. To be more specific, the above "configuration on another signal and/or channel" may be the information element "ssb-PositionInBurst" in SIB1 and/or the information element "ssb-PositionInBurst" in the information element "ServingCell-ConfigCommon". For example, the additional resource for PRACH repetition may be configured (determined) so as not to include a symbol for SSB transmission, which may be referred to as an SSB symbol, configured by the information element "ssb-PositionInBurst" in SIB1 and/or the information element °ssb-PositionInBurst" in the information element "Serving-CellConfigCommon". This makes it possible to avoid an overlap with an SSB symbol used in downlink. The information element "ssb-PositionInBurst" in SIB1 and/or the information element "ssb-Position In Burst" in the information element "ServingCellConfigCommon" may be referred to as "downlink symbol configuration information", "information on a downlink symbol configuration", "symbol configuration information for a synchronization signal"; "information on a symbol configuration for a synchronization signal"; and the like.

**Option 1-3

The above "configuration on another signal and/or channel" may be a configuration on a resource for PRACH initial transmission. To be more specific, the above "configuration on another signal and/or channel" may be an RO for PRACH initial transmission (i.e., RO according to a conventional RO configuration). By way of example, the additional resource for PRACH repetition may be configured (determined) so as not to include an RO configured according to the information element "RACH-ConfigCommon" and/or the information element "RACH-ConfigDedicated": As another example, the additional resource for PRACH repetition may be configured (determined) so as not to include a system frame and/or a subframe and/or a PRACH slot configured according to the information element "RACH-ConfigCommon" and/or the information element "RACH-ConfigDedicated": This makes it possible to avoid an overlap with a resource used for the initial transmission. The information element "RACH-ConfigCommon" and/or the information element "RACH-ConfigDedicated" may be referred to as "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like.

**Option 1-4

The above "configuration on another signal and/or channel" may be any combinations of Options 1-1 to 1-3 described above. For example, the additional resource for PRACH repetition may be configured (determined) so as not to include a downlink symbol and a flexible symbol in Option 1-1 and not to include an SSB symbol (in a case of Option 1-2). In this case, an overlap with a symbol used in downlink can be completely avoided.

*Option 2

In Option 2, the additional resource for PRACH repetition may be at least one of the following. The "(information indicating) the additional resource for PRACH repetition" may be referred to as "configuration information of a resource that is for (repeatedly) transmitting a random access channel and is at least partially different from a resource for initial transmission (first transmission)", "information on a configuration of a resource that is for (repeatedly) transmitting a random access channel and is at least partially different from a resource for initial transmission (first transmission)", and the like.

**Option 2-1

The above "additional resource for PRACH repetition" may be an RO that is defined, configured, indicated, or instructed as proposed in Proposals P1-1 and P1-2 described above.

**Option 2-2

The above "additional resource for PRACH repetition" may be a resource that is defined, configured, indicated, or instructed as proposed in Proposal P1-3 described above.

In Proposal P3-1, UE 200 may receive from gNB 100 information on a resource for PRACH initial transmission (random access configuration information associated with a first resource for transmitting a random access channel). UE 200 may receive from gNB 100 configuration information of a resource configured (by gNB 100) based on configuration information of a signal and/or channel other than the PRACH. The resource is for (repeatedly) transmitting the PRACH and at least partially different from the resource for the initial transmission. Then, UE 200 may configure (determine) the resource for the PRACH initial transmission and the resource for the PRACH repetition from the configuration information, transmit the PRACH to gNB 100 using the resource for the PRACH initial transmission, and transmit the PRACH to gNB 100 using the resource for the PRACH repetition.

As described above, according to Options 1 and 2 of Proposal P3-1, a resource for PRACH initial transmission and a resource for PRACH repetition do not overlap at least partially (are different at least partially), thereby preventing or avoiding a contention between the PRACH initial transmission and the PRACH repetition. Thus, the PRACH repetition can be appropriately performed in the random access procedure.

<Solution 4>

Next, a solution is described as to "(1-4) Whether to increase the number of available preambles per RO (the number of multiplexable preambles per RO) without increasing the RO, and in a case of increasing the number of available preambles, how to increase the number of available preambles".

[Proposal P4-1]

In Proposal P4-1, different PRACH preambles may be respectively defined for PRACH initial transmission and PRACH repetition regardless of whether to increase the number of available preambles per RO. To be more specific, in Proposal P4-1, different route sequence indices used for route sequence generation may be respectively configured (determined or selected) for PRACH initial transmission and PRACH repetition. The "root sequence index" may be referred to as a "root sequence identifier", "root sequence identification information", a "basic sequence index", a "basic sequence identifier", "basic sequence identification information", and the like. The "route sequence index (value)" may be referred to as a "parameter value used for generating a route sequence"; "information used for route sequence generation", and the like.

*Option 1

In Option 1, different route sequence indices may be configured (determined) based on at least one of the following.

**Option 1-1

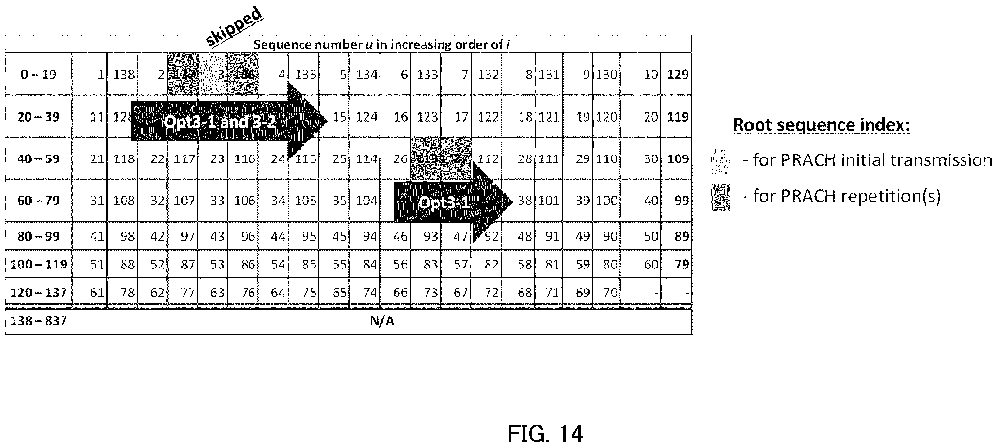

The difference between an existing (starting logical) route sequence index used for PRACH initial transmission and a (starting logical) route sequence index used for PRACH repetition may be specified, configured, indicated, or instructed. UE 200 may determine, calculate, derive, or configure a different (starting logical) route sequence index used for the PRACH repetition based on the difference and the (starting logical) route sequence index used for the PRACH initial transmission, which is configured, indicated, or instructed by gNB 100 by the RRC parameter "prach-RootSequenceIndex". Then, UE 200 may randomly configure (determine or select) a PRACH preamble sequence used for the PRACH repetition based on the (starting logical) route sequence index (more specifically, by deriving starting physical route sequence index u corresponding to starting logical route sequence index i in a table as illustrated in FIG. 14), and transmit a PRACH including the configured PRACH preamble sequence to gNB 100.

**Option 1-2

Another (starting logical) route sequence index dedicated to the PRACH repetition (other than for the PRACH initial transmission) may be specified, configured, indicated, or instructed. UE 200 may determine, calculate, derive, or configure the another (starting logical) route sequence index as the different (starting logical) route sequence index used for the PRACH repetition. Then, UE 200 may randomly configure (determine or select) a PRACH preamble sequence used for the PRACH repetition based on the (starting logical) route sequence index, and transmit a PRACH including the configured PRACH preamble sequence to gNB 100.

*Option 2

In Option 2, the difference in above Option 1-1 and/or the another different root sequence index in above Option 1-2 may be defined, configured, indicated, or instructed according to at least one of the following. Such configurations (information) may be referred to as "route sequence (generation) configuration information", "information on a route sequence (generation) configuration", "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like.

**Option 2-1

The difference and/or the another different (starting logical) route sequence index may be defined in the specification as a fixed value (or a set of fixed values).

**Option 2-2

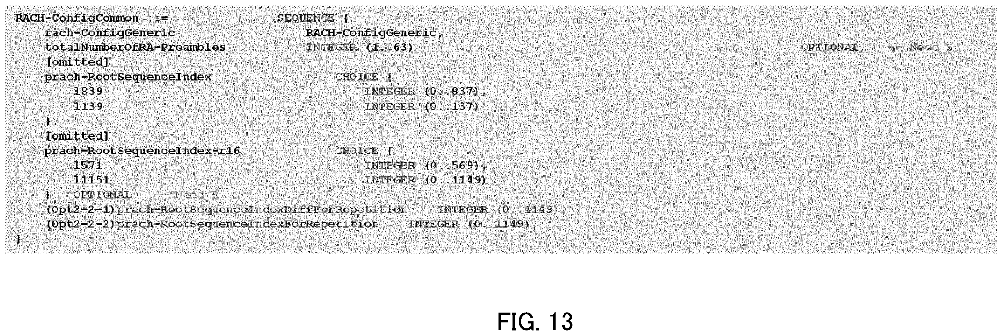

The difference and/or the another different (starting logical) route sequence index may be configured, indicated, or instructed to UE 200 by gNB 100 according to system information such as SIB1 and SIB2, or RRC such as other RRC. As Option 2-2-1, by way of example, the difference between a (starting logical) route sequence index used for PRACH initial transmission and a (starting logical) route sequence index used for PRACH repetition may be configured, indicated, or instructed by RRC. As Option 2-2-2, by way of example, a (starting logical) route sequence index dedicated to the PRACH repetition may be configured, indicated, or instructed by RRC. For example, for Option 2-2-1 and Option 2-2-2, the existing information element "RACH-ConfigCommon" can be extended as illustrated in FIG. 13. In FIG. 13, the RRC parameter °prach-RootSequenceIndexDiffForRepetition" represents the difference between the (starting logical) route sequence index used for the PRACH initial transmission and the (starting logical) route sequence index used for the PRACH repetition. Additionally, in FIG. 13, the RRC parameter "prach-RootSequenceIndexForRepetition" represents the (starting logical) route sequence index dedicated to the PRACH repetition, and the configurable maximum value may be set to 1149 to be consistent with the maximum value of the RRC parameter °prach-RootSequenceIndex-r16". The parameter "prach-RootSequenceIndexDiffForRepetition" and/or the parameter "prach-RootSequenceIndexForRepetition" may be a single parameter for all PRACH preamble sequence lengths or may be different parameters for different PRACH preamble sequence lengths. In the latter case, the configurable maximum value may be equal to the corresponding PRACH preamble sequence length. The names of these parameters are merely examples and can be changed as appropriate. In addition, the PRACH preamble sequence may be referred to as a PRACH sequence or the like.

**Option 2-3

The difference and/or the another different (starting logical) route sequence index may be configured, indicated, or instructed to UE 200 by gNB 100 according to a MAC-CE and/or DCI. As Option 2-3-1, by way of example, the difference between a (starting logical) route sequence index used for PRACH initial transmission and a (starting logical) route sequence index used for PRACH repetition may be configured, indicated, or instructed by a MAC-CE. As Option 2-3-2, by way of example, a (starting logical) route sequence index dedicated to the PRACH repetition may be configured, indicated, or instructed by DCI.

*Option 3

In Option 3, determination of a (physical) route sequence (index) (incremental order of route sequence indices) may be at least one of the following Options 3-1, 3-1', and 3-2.

**Option 3-1

The rule in 3GPP Release 15 or 16 may be reused in terms of the incremental order of the route sequence indices (that is, the incremental order may be the ascending order of (logical) route sequence indices i according to Table 6.3.3.1-3/4/4A/4B described in NPL 1). This is indicated by the arrow labeled "Opt3-1" in FIG. 14, which also represents Table 6.3.3.1-4 described in NPL 1.

**Option 3-1'

The incremental order of the root sequence indices may be the inverse of above Option 3-1, that is, the descending order of (logical) route sequence indices i according to Table 6.3.3.1-3/4/4A/4B described in NPL 1.

**Option 3-2

The incremental order of the route sequence indices may be an order that does not use (e.g., skips) the route sequence index used for PRACH initial transmission. Thus, for example, the route sequence index configured (determined or selected) as a result of skipping may be incremented or decremented from the (logical) route sequence index originally configured for the initial transmission. The combination of above Option 3-1 and this Option 3-2 is indicated by the arrow labeled "Opt3-1 and Opt3-2" in FIG. 14. In this example, sequence number (physical route sequence index) $u = 3$ corresponding to (logical) route sequence index $i = 4$ used for PRACH initial transmission is skipped, and sequence numbers $u = 137$ and $136$ respectively corresponding to (logical) route sequence indices $i = 4$ and $5$ are used for PRACH repetition.

In Proposal P4-1, UE 200 may receive, from gNB 100 as route sequence configuration information, for example, a first route sequence index value (parameter value) used for generating a first route sequence for PRACH initial transmission (first transmission), and either a second route sequence index value that is used for generating a second route sequence for PRACH repetition (second transmission) and is different from the first route sequence index value or a difference to the first route sequence index value. UE 200 may configure (determine) the first route sequence index value, and the second route sequence index value or the above difference. UE 200 may transmit a PRACH to gNB 100 as the initial transmission based on the first route sequence corresponding to the first route sequence index value, and may transmit a PRACH to gNB 100 as the repetition based on the second route sequence corresponding to the second route sequence index value or the above difference. To be more specific, UE 200 may transmit, to gNB 100 as the initial transmission, a PRACH including a first PRACH preamble sequence based on the first route sequence corresponding to the first route sequence index value, and may transmit, to gNB 100 as the repetition, a PRACH including a second PRACH preamble sequence based on the second route sequence corresponding to the second route sequence index value or the above difference.

As described above, according to Options 1 to 3 of Proposal P4-1, a PRACH preamble sequence for PRACH repetition is based on a route sequence other than a route sequence for PRACH initial transmission, thereby preventing or avoiding a contention between the PRACH initial transmission and the PRACH repetition. Thus, the PRACH repetition can be appropriately performed in the random access procedure.

[Proposal P4-2]

In Proposal P4-2, different PRACH preambles may be respectively defined for PRACH initial transmission and PRACH repetition regardless of whether to increase the number of available preambles per RO. To be more specific, in Proposal P4-2, one or more different cyclic shifts used for route sequence generation may be respectively configured (determined or selected) for PRACH initial transmission and PRACH repetition. The "cyclic shift (value)" may be referred to as a "parameter value used for generating a route sequence'; "information used for route sequence generation", and the like.

*Option 1

In Option 1, one or more different cyclic shifts may be configured (determined) based on at least one of the following.

**Option 1-1

One or more different cyclic shifts may be configured (determined) based on a difference between an existing cyclic shift used for PRACH initial transmission and a cyclic shift used for PRACH repetition. That is, one or more cyclic shifts used for the PRACH repetition may be shifted based on a conventional cyclic shift (for the PRACH initial transmission) defined in the specification. UE 200 may determine, calculate, derive, or configure the different cyclic shifts used for the PRACH repetition based on the difference and the cyclic shift used for the PRACH initial transmission, which is determined, calculated, derived, or configured based on a value configured, indicated, or instructed from gNB 100 by the RRC parameter "zeroCorrelationZoneConfig". Then, UE 200 may randomly configure (determine or select) a PRACH preamble sequence used for the PRACH repetition based on the cyclic shifts, and transmit a PRACH including the configured PRACH preamble sequence.

**Option 1-2

One or more different cyclic shifts may be determined (configured) based on other cyclic shifts dedicated to the PRACH repetition (other than for the PRACH initial transmission). That is, one or more cyclic shifts used for the PRACH repetition may be other cyclic shifts dedicated to the PRACH repetition (other than for the PRACH initial transmission). UE 200 may determine, calculate, derive, or configure those other cyclic shifts as the different cyclic shifts used for the PRACH repetition. Then, UE 200 may randomly configure (determine or select) a PRACH preamble sequence used for the PRACH repetition based on the cyclic shifts, and transmit a PRACH including the configured PRACH preamble sequence.

*Option 2

In Option 2, the difference in above Option 1-1 and/or those other different cyclic shifts in above Option 1-2 may be defined, configured, indicated, or instructed according to at least one of the following. Such configurations (information) may be referred to as "route sequence (generation) configuration information", "information on a route sequence (generation) configuration", "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like.

**Option 2-1

The difference and/or other different cyclic shifts may be defined in the specification as a fixed value (or a set of fixed values). As an example, in a case of the difference, the difference in cyclic shift values may be defined for the PRACH repetition. As another example, in a case of those other different cyclic shifts, a set of dedicated cyclic shifts may be defined for the PRACH repetition. In the example of this Option 2-1, which is combined with above Option 1-1, the cyclic shift may be defined according to the following expression indicated in bold in Expression 1 below, which extends the expression described in "6.3.3.1 Sequence generation" of NPL 1.

[1]

$$C_v = \begin{cases} vN_{CS} & v = 0,1,\dots,\lfloor L_{RA}/N_{CS} \rfloor - 1, N_{CS} \neq 0 & \text{for unrestricted sets, for initial transmission} \\ 0 & N_{CS} = 0 & \text{for unrestricted sets, for initial transmission} \\ (vN_{CS} + \textbf{diffCS}) \bmod L_{RA} & v = 0,1,\dots,\lfloor L_{RA}/N_{CS} \rfloor - 1, N_{CS} \neq 0 & \textbf{for unrestricted sets, for repetition} \\ \dots & \dots \end{cases}$$

... (Expression 1)

In Expression 1, Cv represents a cyclic shift, $N_{cs}$ represents how many times a cyclic shift can be used in a given route sequence determined based on a value of the information element "zeroCorrelationZoneConfig" described above, diffCS represents a difference to a cyclic shift value, and $L_{RA}$ represents a PRACH preamble sequence length. Note that the values of v may be in ascending order or in descending order.

**Option 2-2

The difference and/or other different cyclic shifts may be configured, indicated, or instructed to UE 200 by gNB 100 according to system information such as SIB1 and SIB2, or RRC such as other RRC. As an example, in a case of the difference, the difference in cyclic shift values may be configured, indicated, or instructed for the PRACH repetition according to the RRC. As another example, in a case of those other different cyclic shifts, a set of dedicated cyclic shifts may be configured, indicated, or instructed for the PRACH repetition according to the RRC.

**Option 2-3

The difference and/or other different cyclic shifts may be configured, indicated, or instructed to UE 200 by gNB 100 according to a MAC-CE and/or DCI. In one example, the difference between the cyclic shift used for the PRACH initial transmission and the cyclic shift used for the PRACH repetition may be configured, indicated, or instructed by the MAC-CE. In another example, a set of cyclic shifts dedicated to the PRACH repetition may be configured, indicated, or instructed by the DCI.

In Proposal P4-2, UE 200 may receive, from gNB 100 as route sequence configuration information, for example, a first cyclic shift value (parameter value) used for generating a first route sequence for PRACH initial transmission (first transmission), and either a second cyclic shift value that is used for generating a second route sequence for PRACH repetition (second transmission) and is different from the first cyclic shift value or a difference to the first cyclic shift value. UE 200 may configure (determine) the first cyclic shift value, and the second cyclic shift value or the above difference. UE 200 may transmit a PRACH to gNB 100 as the initial transmission based on the first route sequence corresponding to the first cyclic shift value, and may transmit a PRACH to gNB 100 as the repetition based on the second route sequence corresponding to the second cyclic shift value or the above difference. To be more specific, UE 200 may transmit, to gNB 100 as the initial transmission, a PRACH including a first PRACH preamble sequence based on the first route sequence corresponding to the first cyclic shift value, and may transmit, to gNB 100 as the repetition, a PRACH including a second PRACH preamble sequence based on the second route sequence corresponding to the second cyclic shift value or the above difference.

As described above, according to Options 1 and 2 of Proposal P4-2, a PRACH preamble sequence for PRACH repetition is based on a cyclic shift other than a cyclic shift for PRACH initial transmission, thereby preventing or avoiding a contention between the PRACH initial transmission and the PRACH repetition. Thus, the PRACH repetition can be appropriately performed in the random access procedure.

[Proposal P4-3]

In Proposal P4-3, the number of available PRACH preambles per RO may be increased. The RO may be referred to as a "resource for a random access channel" or the like.

*Option 1

In Option 1, the (exact) number of PRACH preambles per RO may be any of the following.

**Option 1-1

The number of PRACH preambles per RO may be fixed to 128 (= 64*2). For example, the fixed number of 128 may be defined in the specification.

**Option 1-2

The number of PRACH preambles per RO may be 64*X, where X is an integer equal to or greater than 2. For example, value X may be fixed and defined in the specification, or may be configured, indicated, or instructed to UE 200 by gNB 100 according to RRC, MAC-CE and/or DCI. The configuration (information) of the "value X" may be referred to as "configuration information of the number of preambles", "information on a configuration of the number of preambles", "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like.

**Option 1-3

The number of PRACH preambles per RO may be Y, where Y is an integer greater than 64. For example, value Y may be fixed and defined in the specification, or may be configured, indicated, or instructed to UE 200 by gNB 100 according to RRC, MAC-CE and/or DCI. The configuration (information) of the "value Y" may be referred to as "configuration information of the number of preambles", "information on a configuration of the number of preambles", "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like.

**Option 2

In Option 2, the new definitions of the number of PRACH preambles per RO in above Option 1 may be enabled in a case of at least one of the following.

**Option 2-1

The new definitions of the number of PRACH preambles may be enabled at all times. That is, gNB 100 (base station) and UE 200 (terminal) in 3GPP Release 18 may assume without exception that the values proposed in Options 1-1 to 1-3 of Proposal P4-3 described above are the numbers of PRACH preambles per RO.

**Option 2-2

The new definitions of the number of PRACH preambles may be enabled according to a configuration. For example, when gNB 100 configures that PRACH repetition is enabled (turned on) or when UE 200 receives information indicating the configuration, gNB 100 and UE 200 may assume that the values proposed in Options 1-1 to 1-3 of Proposal P4-3 described above are the numbers of PRACH preambles per RO. In contrast, when gNB 100 configures that PRACH repetition is disabled (turned off) or when UE 200 receives information indicating the configuration, gNB 100 and UE 200 may assume that the number of PRACH preambles per RO is 64.

**Option 2-3

The new definitions of the number of PRACH preambles may be enabled when a predetermined condition is met or not met. For example, when an SSB associated with a PRACH that the UE is about to transmit (or an RO that the UE is about to use) is received at a received power (RSRP) less than a threshold (or equal to or less than the threshold), UE 200 may assume that the values proposed in Options 1-1 to 1-3 of Proposal P4-3 described above are the numbers of PRACH preambles per RO. In this case, gNB 100 may assume without exception that the values proposed in Options 1-1 to 1-3 of Proposal P4-3 described above are the numbers of PRACH preambles per RO, as in Option 2-1 described above.

In Proposal P4-3, UE 200 may receive the "value X" or the "value Y", for example, from gNB 100 as configuration information of the number of preambles. UE 200 may configure (determine) the number of available PRACH preambles per RO (resource for random access channel) based on the "value X" or the "value Y"; for example. The number may be greater than 64. Among the available PRACH preambles, UE 200 may randomly configure (determine or select) a first PRACH preamble for PRACH initial transmission (first transmission) and randomly configure (determine or select) a second PRACH preamble for PRACH repetition (second transmission). Then, UE 200 may transmit a PRACH including the configured first PRACH preamble as the first transmission, and may transmit a PRACH including the configured second PRACH preamble as the second transmission.

As described above, according to Options 1 and 2 of Proposal P4-3, the number of PRACH preambles for PRACH transmission (initial transmission and repetition) increases from the conventional number of PRACH preambles for PRACH transmission, and different PRACH preambles are likely to be randomly configured (determined) for PRACH initial transmission and PRACH repetition, thereby preventing or avoiding a contention between the PRACH initial transmission and the PRACH repetition. Thus, the PRACH repetition can be appropriately performed in the random access procedure.

<Solution 5>

Next, a solution will be described as to "(1-5) Whether to explicitly prevent or avoid a contention between PRACH initial transmission and PRACH repetition in an existing (same) RO, and in a case of explicitly preventing or avoiding the contention, how to explicitly prevent or avoid the contention".

[Proposal P5-1]

In Proposal P5-1, PRACH preamble groups may be introduced so that a PRACH preamble for the PRACH initial transmission and a PRACH preamble for the PRACH repetition are defined separately.

*Option 1

In Option 1, a new group for PRACH initial transmission and a new group for PRACH repetition may be defined as follows.

**Option 1-1

A configuration may be made for one group so as to group existing groups A and B to be grouped according to the size (amount of data) of Msg3. To be more specific, the number of PRACH preamble indices for the PRACH initial transmission (or the PRACH repetition) may be configured by gNB 100 for one group, and the number of PRACH preamble indices may be configured, indicated, or instructed to UE 200 by gNB 100. The number of PRACH preamble indices for the other group may be determined, calculated, derived, or configured by UE 200 by subtracting the above number of PRACH preamble indices from the number of PRACH preamble indices per RO, which is 64. In this case, only the number of PRACH preamble indices for one group is indicated to UE 200, thereby preventing an increase in the amount of signaling. The "preamble index" may be referred to as "preamble identification information", a "preamble identifier", and the like. The configuration (information) of "the number of PRACH preamble indices" may be referred to as "configuration information of the number of preambles (indices)", "information on a configuration of the number of preambles (indices)", "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like. Note that the number of groups is not limited to two, and there may be one group for each transmission in the repetition as long as there is no contradiction for the existing groups A and B.

**Option 1-2

The number of PRACH preamble indices available for the PRACH repetition may be explicitly configured. This configuration may be in accordance with RRC, MAC-CE and/or DCI. For example, number M of PRACH preamble indices may be configured by gNB 100 for the PRACH repetition (group for PRACH repetition), and number M may be configured, indicated, or instructed to UE 200 by gNB 100. The configuration (information) of "value M" may be referred to as "configuration information of the number of preambles (indices)", "information on a configuration of the number of preambles (indices)", "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like.

*Option 2

In Option 2, the definitions of the existing groups A and B described above may be reused.

**Option 2-1

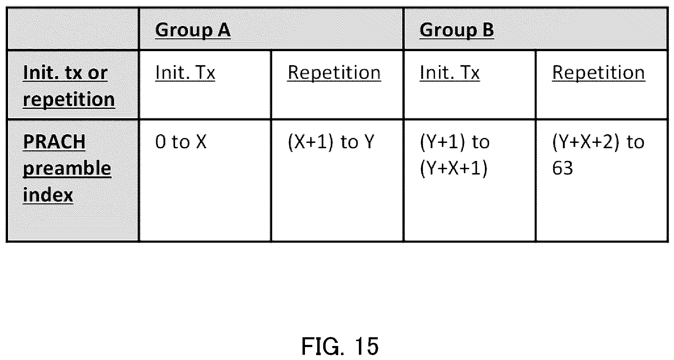

Configurations on the PRACH preamble indices to be used for the PRACH initial transmission and the PRACH repetition may be considered for group A and/or group B. For example, as illustrated in FIG. 15, each of groups A and B may be divided into two, one for the PRACH initial transmission and the other for the PRACH repetition. In the example illustrated in FIG. 15, PRACH preamble indices 0 to X included in group A may be used for the PRACH initial transmission, and PRACH preamble indices (X + 1) to Y included in group A may be used for the PRACH repetition. Likewise, PRACH preamble indices (Y + 1) to (Y + X + 1) included in group B may be used for the PRACH initial transmission, and PRACH preamble indices (Y + X + 2) to 63 included in group B may be used for the PRACH repetition. Note that value Y may be configured, indicated, or instructed in a conventional manner. In this case, values X and Y may be specified so that each of the numbers of PRACH preamble indices to be used for the PRACH initial transmission in groups A and B and each of the numbers of PRACH preamble indices to be used for the PRACH repetition in groups A and B are less than both PRACH preamble indices included in group A and PRACH preamble indices included in group B. Value X may be fixed and defined in the specification, or may be configured, indicated, or instructed to UE 200 by gNB 100 according to RRC, MAC-CE and/or DCI. The configurations (information) of "value X" and "value Y" may be referred to as "configuration information of the number of preambles (indices)", "information on a configuration of the number of preambles (indices)", "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like. Note that, in the example illustrated in FIG. 15, the PRACH preamble indices used for the PRACH initial transmission (or PRACH repetition) are assigned continuously in the group, but in another example, the PRACH preamble indices may be assigned discontinuously in the group.

In Proposal P5-1, UE 200 may receive "value M", "value X", and/or "value Y" from gNB 100 as configuration information of the number of preambles, for example. UE 200 may configure (determine or select) a first PRACH preamble index for the PRACH initial transmission (first transmission) from a first group including a first number (e.g., M or $(X + 1)$) of PRACH preamble indices (identifiers) for the PRACH initial transmission among a first specific number (e.g., 64 or $(Y + 1)$) of PRACH preamble indices. UE 200 may configure (determine or select) a second PRACH preamble index for the PRACH repetition (second transmission) from a second group including a second number, which is obtained by subtracting the first number from the first specific number, of PRACH preamble indices for the PRACH repetition. Then, UE 200 may transmit a PRACH to gNB 100 as the initial transmission based on the configured first PRACH preamble index, and may transmit a PRACH to gNB 100 as the repetition based on the configured second PRACH preamble index. To be more specific, UE 200 may transmit, to gNB 100 as the initial transmission, a PRACH including a first PRACH preamble corresponding to the configured first PRACH preamble index, and may transmit, to gNB 100 as the repetition, a PRACH including a second PRACH preamble corresponding to the configured second PRACH preamble index.

Further, in Proposal P5-1, the first group and the second group may be divided from predefined group A (third group) including a third number (e.g., $(Y + 1)$) of PRACH preamble indices (identifiers) among a second specific number (e.g., 64) of PRACH preamble indices, and may be divided from predefined group B (fourth group) including a fourth number, which is obtained by subtracting the third number from the second specific number, of PRACH preamble indices.

As described above, according to Options 1 and 2 of Proposal P5-1, a PRACH preamble group for the PRACH initial transmission and a PRACH preamble group for the PRACH repetition are distinguished from each other, and a PRACH preamble index to be used for the PRACH repetition is different from a PRACH preamble index to be used for the PRACH initial transmission, thereby preventing or avoiding a contention between the PRACH initial transmission and the PRACH repetition even in a case of using a conventional RO. Thus, the PRACH repetition can be appropriately performed in the random access procedure. In addition, no additional resource is used for the PRACH repetition in Options 1 and 2 of Proposal P5-1; accordingly, the load and resource efficiency of the gNB that blind-decodes a PRACH can be maintained as in the conventional case.

[Proposal P5-2]

In Proposal P5-2, an association period in a predetermined duration (time length) may be divided into a plurality of groups so that the PRACH initial transmission and the PRACH repetition are performed in different association periods respectively. The "association period" may be referred to as a "period for random access channel transmission, a "period for transmission of a random access channel, a "period including at least one of each RO corresponding to each of all SSB beams that have been transmitted", and the like.

*Option 1

In Option 1, the "predetermined duration" may be defined, configured, indicated, or instructed as at least one of the following. The configuration (information) of the "predetermined duration", for example, may be referred to as "random access transmission period configuration information", "information on a configuration of a random access transmission period", "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like.

**Option 1-1

The above "predetermined duration" may be defined, configured, indicated, or instructed as an SSB period (e.g., 20 milliseconds).

**Option 1-2

The above "predetermined duration" may be defined, configured, indicated, or instructed as 160 milliseconds or, more generally, as a maximum period (maximum value) of an SSB burst and a PRACH configuration period.

**Option 1-3

The above "predetermined duration" may be defined, configured, indicated, or instructed as a multiple (an integer multiple of two or more) of the SSB period.

**Option 1-4

The above "predetermined duration" may be defined, configured, indicated, or instructed as 160 milliseconds, or more generally as a multiple (an integral multiple of two or more) of the maximum period (maximum value) of the SSB burst and the PRACH configuration period.
Note that the SSB period, the maximum period, and the multiple described above may be fixed and defined in the specification, or may be configured, indicated, or instructed to UE 200 by gNB 100 according to RRC, MAC-CE and/or DCI.

*Option 2

In Option 2, an exact period for the PRACH initial transmission and an exact period for the PRACH repetition may be defined based on any of the following.

**Option 2-1

The first X association periods may be for the PRACH initial transmission, and the next X association periods may be for the PRACH repetition. A cycle of these 2X association periods may be repeated. Value X or 2X may be fixed and defined in the specification, or may be configured, indicated, or instructed to UE 200 by gNB 100 according to RRC, MAC-CE and/or DCI. The configuration (information) of "value X" and "value 2X", for example, may be referred to as "random access transmission period configuration information", "information on a configuration of a random access transmission period", "random access configuration information", "information on a random access configuration", "random access channel transmission configuration information", "information on a random access channel transmission configuration", "information on a resource for random access", "information on a resource for random access channel transmission", "information on a resource for transmitting a random access channel", and the like.

**Option 2-2

The association period for the PRACH initial transmission may be arranged anywhere in the predetermined duration, and the association period for the PRACH repetition may be limited to be arranged in the first half, the second half, or a certain specified range in the predetermined duration.
In Proposal P5-2, UE 200 may receive, for example, the "predetermined duration", "value X", and/or "value 2X" from gNB 100 as random access transmission period configuration information. UE 200 may configure (determine), in a predetermined duration, a first association period for the PRACH initial transmission (first transmission) and a second association period that is for the PRACH repetition (second transmission) and is different from the first association period based on the random access transmission period configuration information, for example. To be more specific, UE 200 may configure (determine) the first association period and the second association period so that first X first association periods and next X second association periods are repeated in the predetermined duration, for example. Then, UE 200 may transmit a PRACH to gNB 100 as the initial transmission in the configured first association period, and may transmit a PRACH to gNB 100 as the repetition in the configured second association period.
As described above, according to Options 1 and 2 of Proposal P5-2, the PRACH initial transmission and the PRACH repetition are performed in different association periods respectively, thereby preventing or avoiding a contention between the PRACH initial transmission and the PRACH repetition even in a case of using a conventional RO. Thus, the PRACH repetition can be appropriately performed in the random access procedure. In addition, no additional resource is used for the PRACH repetition in Options 1 and 2 of Proposal P5-2; accordingly, the load and resource efficiency of the gNB that blind-decodes a PRACH can be maintained as in the conventional case.

<Definitions of PRACH Initial Transmission and PRACH Repetition>

The terms "PRACH initial transmission" and "PRACH repetition" have been used in the above description. The "PRACH initial transmission" and "PRACH repetition" may mean any of the following.

*Option 1

In Option 1, both the PRACH initial transmission and the PRACH repetition may mean PRACH transmissions before UE 200 receives an RAR (Msg2), that is, before an RAR (Msg2) reception opportunity.

*Option 2

In Option 2, the PRACH initial transmission may mean the PRACH transmission before UE 200 receives an RAR (Msg2), and the PRACH repetition may mean any of the following.

**Option 2-1

The PRACH repetition may be the PRACH transmission after at least one RAR (Msg2) is blind-decoded, and only executable when the RAR (Msg2) is not decoded by UE 200.

**Option 2-2

The PRACH repetition may be the PRACH transmission after at least one RAR (Msg2) is blind-decoded, and executable both when the RAR (Msg2) is not decoded by UE 200 and when the RAR (Msg2) is decoded by UE 200.

<UE Capability>

UE 200 may report to gNB 100 as a UE capability whether UE 200 supports Proposals P1 to P5 described above.

(Apparatus Configuration)

Next, a description will be given of exemplary functional configurations of gNB 100 and UE 200 that perform the processing and operations described so far. gNB 100 and UE 200 may have a function of implementing the embodiment described above. Note that gNB 100 and UE 200 may each have only some functions in the embodiment.

<gNB (Base Station)>

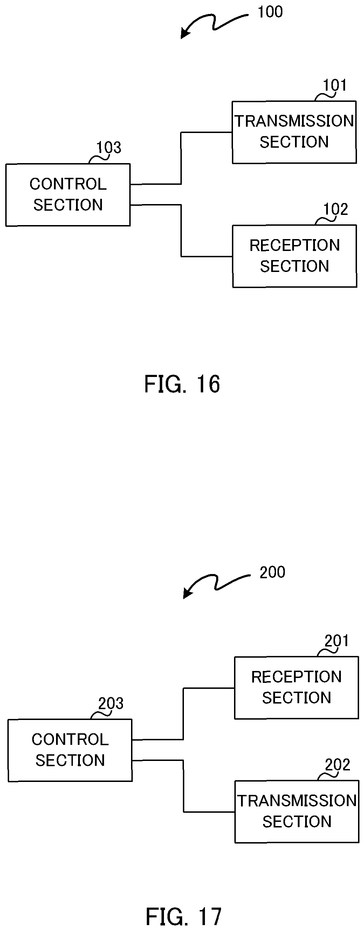

FIG. 16 is a block diagram illustrating an exemplary configuration of gNB (base station) 100 according to an embodiment of the present disclosure. The gNB includes, for example, transmission section 101, reception section 102, and control section 103. gNB 100 communicates with UE 200 (see FIG. 17) by radio.

Transmission section 101 transmits a DL signal to UE 200. For example, transmission section 101 transmits the DL signal under the control of control section 103.

For example, transmission section 101 transmits various control signals (control signals of an RRC layer, etc.), a reference signal, a data signal, etc. to UE 200 as the DL signal. Transmission section 101 transmits various signals, a channel, configuration information, control information, etc. described in the above embodiment to UE 200 as the DL signal, for example.

For example, the DL signal may include information indicating scheduling related to signal transmission by UE 200 (e.g., uplink grant), higher layer control information, and the like.

Reception section 102 receives a UL signal transmitted from UE 200. For example, reception section 102 receives the UL signal under the control of control section 103.

For example, reception section 102 receives a signal including information on the processing capability of UE 200 (e.g., UE capability), various control signals, a reference signal, a data signal, etc. from UE 200 as the UL signal. Reception section 102 receives, for example, a PRACH as the UL signal.

Control section 103 controls the overall (communication) operation of gNB 100 including transmission processing in transmission section 101 and reception processing in reception section 102.

For example, control section 103 acquires information such as data and control information from a higher layer, and outputs the information to transmission section 101. Control section 103 also outputs data and control information received from reception section 102 to the higher layer.

Control section 103 performs an operation other than the transmission and reception described in the above embodiment. Note that the operation may be performed by transmission section 101 and/or reception section 102.

<UE (Terminal)>

FIG. 17 is a block diagram illustrating an exemplary configuration of UE (terminal) 200 according to an embodiment of the present disclosure. UE 200 includes, for example, reception section 201, transmission section 202, and control section 203. UE 200 communicates with gNB 100 (see FIG. 16) by radio, for example.

Reception section 201 receives a DL signal transmitted from gNB 100. For example, reception section 201 receives the DL signal under the control of control section 203.

For example, reception section 201 receives various control signals, a reference signal, a data signal, etc. from gNB 100 as the DL signal. Reception section 201 receives, for example, various signals, a channel, configuration information, control information, etc. described in the above embodiment as the DL signal from gNB 100.

Transmission section 202 transmits a UL signal to gNB 100. For example, transmission section 202 transmits the UL signal under the control of control section 203.

For example, transmission section 202 transmits a signal including information on the processing capability of UE 200, various control signals, a reference signal, a data signal, etc. to gNB 100 as the UL signal. Transmission section 202 transmits, for example, a PRACH to gNB 100.

Control section 203 controls the overall (communication) operation of UE 200 including reception processing in reception section 201 and transmission processing in transmission section 202.

For example, control section 203 acquires information such as data and control information from a higher layer, and outputs the information to transmission section 202. Control section 203 also outputs, for example, data and control information received from reception section 201 to the higher layer.

Control section 203 performs an operation other than the transmission and reception described in the above embodiment. Note that the operation may be performed by reception section 201 and/or transmission section 202.

Furhter, a channel used for DL signal transmission and a channel used for UL signal transmission are not limited to the examples described above. For example, the channel used for DL signal transmission and the channel used for UL signal transmission may include a RACH and a PBCH described above.

<Hardware Configuration and the like>

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

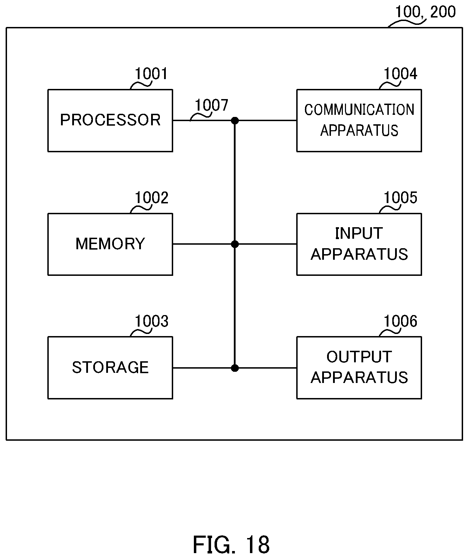

For example, gNB 100, UE 200, and the like according to an embodiment of the present disclosure may function as a computer that executes processing of a wireless communication method of the present disclosure. FIG. 18 illustrates an exemplary hardware configuration of gNB 100 and UE 200 according to one embodiment of the present disclosure. Physically, gNB 100 and UE 200 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of gNB 100 and of UE 200 may include one apparatus or a plurality of apparatuses illustrated in the drawings or may not include part of the apparatuses.

The functions of gNB 100 and UE 200 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control sections 103 and 203 and the like as described above may be implemented using processor 1001.

28

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 103 of gNB 100, control section 203 of UE 200, and the like may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, transmission section 202, and the like as described above may be implemented using communication apparatus 1004. A transmission section and a reception section of communication apparatus 1004 may be separately implemented physically or logically.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) that makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, gNB 100 and UE 200 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

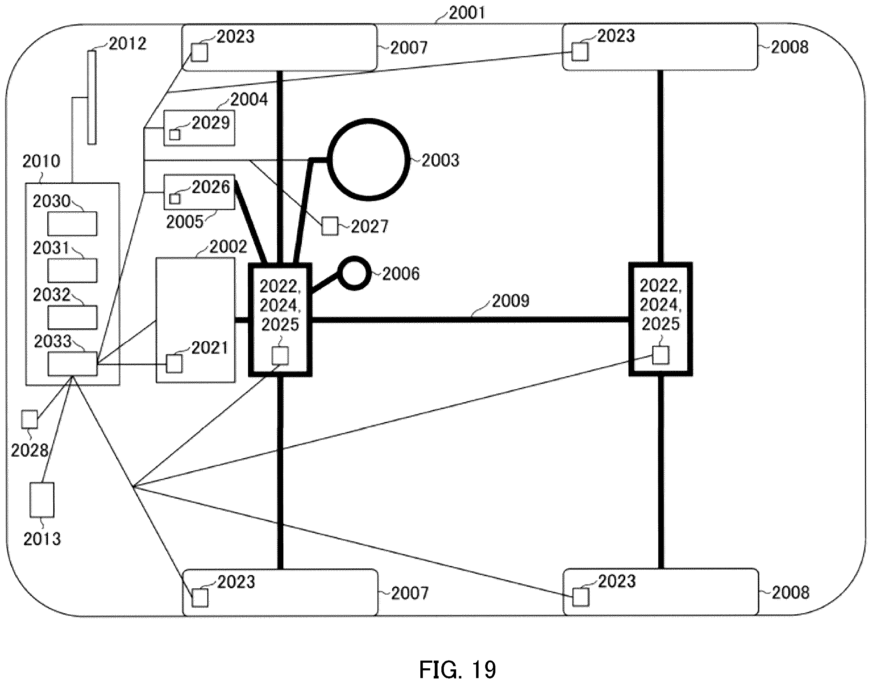

FIG. 19 illustrates an exemplary configuration of vehicle 2001. As illustrated in FIG. 19, vehicle 2001 includes, drive section 2002, steering section 2003, accelerator pedal 2004, brake pedal 2005, gear shift 2006, front wheels 2007, rear wheels 2008, axle 2009, electronic control section 2010, various sensors 2021 to 2029, information service section 2012, and communication module 2013. The aspects/embodiments described in the present disclosure may be applied to a communication apparatus mounted on vehicle 2001, and for example, may be applied to communication module 2013.

Drive section 2002 is composed of an engine or a motor, or has a hybrid configuration of an engine and a motor, for example. Steering section 2003 includes at least a steering wheel, and is configured to steer at least either front wheels or rear wheels based on an operation of the steering wheel operated by a user.

Electronic control section 2010 is composed of microprocessor 2031, memory (ROM and RAM) 2032, and communication port (IO port) 2033. Signals from various sensors 2021 to 2029 provided in vehicle 2001 are inputted to electronic control section 2010. Electronic control section 2010 may be referred to as an electronic control unit (ECU).

The signals from various sensors 2021 to 2029 include a current signal from current sensor 2021 for sensing the current of the motor, a rotation speed signal of the front and rear wheels acquired by rotation speed sensor 2022, a pneumatic signal of the front and rear wheels acquired by pneumatic sensor 2023, a vehicle speed signal acquired by vehicle speed sensor 2024, an acceleration signal acquired by acceleration sensor 2025, an accelerator pedal depression signal acquired by accelerator pedal sensor 2029, a brake pedal depression signal acquired by brake pedal sensor 2026, an operation signal of the gear shift acquired by gear shift sensor 2027, a detection signal for detecting an obstacle, a vehicle, a pedestrian, etc., acquired by object detection sensor 2028, and the like.

Information service section 2012 is composed of various devices for providing various types of information such as driving information, traffic information, entertainment information, etc., and one or more ECUs for controlling those devices. The various devices include a car navigation system, an audio system, a speaker, a TV, a radio, and the like. Information service section 2012 provides various types of multimedia information and multimedia services to a passenger of vehicle 2001 using information acquired from an external device via communication module 2013, for example.

Driving support system section 2030 is composed of various devices for providing functions for preventing an accident and reducing the driving load of a driver, and one or more ECUs for controlling those devices. Such devices include a millimeter-wave radar, light detection and ranging (LiDAR), a camera, a positioning locator (e.g., GNSS, etc.), map information (e.g., high definition (HD) map, autonomous vehicle (AV) map, etc.), a gyro system (e.g., inertial measurement unit (IMU), inertial navigation system (INS), etc.), an artificial intelligence (AI) chip, an AI processor, and the like. In addition, driving support system section 2030 transmits and receives various types of information via communication module 2013, and realizes a driving support function or an automatic driving function.

Communication module 2013 can communicate with microprocessor 2031 and the components of vehicle 2001 via a communication port. For example, communication module 2013 transmits and receives data, via communication port 2033, to and from drive section 2002, steering section 2003, accelerator pedal 2004, brake pedal 2005, gear shift 2006, front wheels 2007, rear wheels 2008, axle 2009, microprocessor 2031 and memory (ROM and RAM) 2032 in electronic control section 2010, and various sensors 2021 to 2029, which are all provided in vehicle 2001.

Communication module 2013 is a communication device controllable by microprocessor 2031 of electronic control section 2010 and capable of communicating with an external device. For example, communication module 2013 transmits and receives various types of information to and from the external device via radio communication. Communication module 2013 may be provided either inside or outside of electronic control section 2010. The external device may be, for example, a base station, a mobile station, or the like.

Communication module 2013 transmits a current signal inputted to electronic control section 2010 from the current sensor to the external device via radio communication. Further, communication module 2013 transmits signals inputted to electronic control section 2010 to the external device via radio communication. The signals includes a rotation speed signal of the front and rear wheels acquired by rotation speed sensor 2022, a pneumatic signal of the front and rear wheels acquired by pneumatic sensor 2023, a vehicle speed signal acquired by vehicle speed sensor 2024, an acceleration signal acquired by acceleration sensor 2025, an accelerator pedal depression signal acquired by accelerator pedal sensor 2029, a brake pedal depression signal acquired by brake pedal sensor 2026, an operation signal of the gear shift acquired by gear shift sensor 2027, a detection signal for detecting an obstacle, a vehicle, a pedestrian, etc., acquired by object detection sensor 2028, and the like.

Communication module 2013 receives various types of information (traffic information, signal information, inter-vehicle information, etc.) transmitted from the external device, and displays the information on information service section 2012 provided in vehicle 2001. In addition, communication module 2013 stores various types of information received from the external device in available memory 2032 by microprocessor 2031. Microprocessor 2031 may control, based on the information stored in memory 2032, drive section 2002, steering section 2003, accelerator pedal 2004, brake pedal 2005, gear shift 2006, front wheels 2007, rear wheels 2008, axle 2009, various sensors 2021 to 2029, etc., which all provided in vehicle 2001.

(Variation)

In the above embodiment, an SSB is used as an example to describe the operation related to the random access procedure, and the like, but the present disclosure is not limited to this. For example, a CSI-RS may be used instead of the SSB.

(Summary of Embodiment)

<Regarding Solution 1>

An embodiment of the present disclosure facilitates providing a terminal including: a control section that configures a first information portion on a first resource for transmitting a random access channel, and configures a second information portion on a second resource for transmitting the random access channel, the second resource being a resource at least partially different from the first resource; and a transmission section that transmits the random access channel to a base station using the first resource based on the first information portion, and transmits the random access channel to the base station using the second resource based on the second information portion.

With the configuration described above, the first resource for a certain transmission of the random access channel is at least partially different from the second resource for another transmission of the random access channel, thereby preventing or avoiding a contention between a certain transmission of the random access channel and another transmission of the random access channel. Thus, random access channel repetition can be appropriately performed in a random access procedure.

In the terminal, when a plurality of the second information portions are present, the transmission section transmits the random access channel a plurality of times using a plurality of the second resources respectively corresponding to the plurality of second information portions.

The above configuration allows a flexible configuration for each of the plurality of transmissions of the random access channel.

In the terminal, when a single second information portion is present, the transmission section transmits the random access channel a plurality of times using the second resource corresponding to the single second information portion, the single second information portion being the second information portion.

The above configuration prevents an increase in the amount of signaling related to a configuration on the plurality of transmissions of the random access channel.

In the terminal, the first resource includes a first system frame for transmitting the random access channel, a first subframe in the first system frame, and a first slot in the first subframe, the second resource includes a second system frame for transmitting the random access channel, a second subframe in the second system frame, and a second slot in the second system frame, and at least one of the first system frame, the first subframe, and/or the first slot is different in a system frame number, a subframe number, and/or a slot number from at least a corresponding one of the second system frame, the second subframe, and/or the second slot.

The above configuration excludes the first resource for a certain transmission of the random access channel for the second resource for another transmission.

In the terminal, the first resource is completely different from the second resource.

The above configuration makes it possible to avoid a contention between a certain transmission of the random access channel and another transmission of the random access channel.

Further, an embodiment of the present disclosure facilitates providing a communication method including: configuring, by a terminal, a first information portion on a first resource for transmitting a random access channel; configuring, by the terminal, a second information portion on a second resource for transmitting the random access channel, the second resource being a resource at least partially different from the first resource; transmitting, by the terminal, the random access channel to a base station using the first resource based on the first information portion; and transmitting, by the terminal, the random access channel to the base station using the second resource based on the second information portion.

With the configuration described above, the first resource for a certain transmission of the random access channel is at least partially different from the second resource for another transmission of the random access channel, thereby preventing or avoiding a contention between a certain transmission of the random access channel and another transmission of the random access channel. Thus, random access channel repetition can be appropriately performed in a random access procedure.

<Regarding Solution 2>

An embodiment of the present disclosure facilitates providing a terminal including: a control section that makes determination of repetition of a random access channel assuming that the repetition of the random access channel is necessary when a condition is met; and a transmission section that performs, upon the determination, the repetition of the random access channel to a base station in accordance with a configuration on the repetition of the random access channel from the base station.

With the above configuration, random access channel repetition is performed only when the random access channel repetition is assumed to be necessary based on a condition, thereby preventing or avoiding unnecessary use of resources, which is advantageous in terms of the resource efficiency. Thus, the random access channel repetition can be appropriately performed in a random access procedure.

In the terminal, the terminal further includes a reception section that receives a synchronization signal or a reference signal from the base station, wherein, the condition is that a received power of the synchronization signal or the reference signal is less than a threshold.

With the above configuration, the random access channel repetition can be performed when the communication quality is assumed to be poor.

In the terminal, the condition is that specific random access configuration information is configured and/or the specific random access configuration information is greater than a threshold.

With the above configuration, the random access channel repetition can be performed in a case of a specific configuration on a random access procedure where the random access channel repetition is assumed to be necessary.

In the terminal, the condition is that a purpose and/or a type of a random access procedure is a specific purpose and/or a specific type.

With the above configuration, the random access channel repetition can be performed in a case of a random access procedure with a specific purpose and/or type for which the random access channel repetition is assumed to be necessary.

In the terminal, the condition is that a duration for receiving a response message to the random access channel is greater than a threshold and/or the terminal does not receive the response message within the duration.

With the above configuration, the random access channel repetition can be performed in a case where the random access channel repetition is assumed to be necessary. Such a case includes a case of a specific configuration on a random access procedure (Msg 2, specifically) and/or a case where the communication quality is assumed to be poor.

Further, an embodiment of the present disclosure facilitates providing a communication method including: making, by a terminal, determination of repetition of a random access channel assuming that the repetition of the random access channel is necessary when a condition is met; and upon the determination, performing, by the terminal, the repetition of the random access channel to a base station in accordance with a configuration on the repetition of the random access channel from the base station.

With the above configuration, the random access channel repetition is performed only when the random access channel repetition is assumed to be necessary based on a condition, thereby preventing or avoiding unnecessary use of resources, which is advantageous in terms of the resource efficiency. Thus, the random access channel repetition can be appropriately performed in a random access procedure.

<Regarding Solution 3>

An embodiment of the present disclosure facilitates providing a terminal including: a reception section that receives, from a base station, random access configuration information on a first resource for transmitting a random access channel and configuration information on a second resource configured based on configuration information of a signal and/or a channel other than the random access channel, the second resource being a resource for transmitting the random access channel and at least partially different from the first resource; and a transmission section that transmits the random access channel to the base station using the first resource, and transmits the random access channel to the base station using the second resource.

With the configuration described above, the first resource for a certain transmission of the random access channel is at least partially different from the second resource for another transmission of the random access channel, thereby preventing or avoiding a contention between a certain transmission of the random access channel and another transmission of the random access channel. Thus, random access channel repetition can be appropriately performed in a random access procedure.

In the terminal, the configuration information of the signal and/or the channel other than the random access channel includes symbol configuration information, downlink symbol configuration information, and/or the random access configuration information.

With the above configuration, a resource to be used as the second resource can be configured taking into account symbols used in uplink and downlink and/or the resource used for a certain transmission of the random access channel.

In the terminal, the second resource does not include a downlink symbol configured by the symbol configuration information.

The above configuration makes it possible to avoid an overlap between the second resource and a symbol used in downlink.

In the terminal, the second resource does not include a flexible symbol configured by the symbol configuration information and/or a synchronization signal block symbol configured by the downlink symbol configuration information.

The above configuration prevents the second resource from overlapping a flexible symbol (symbol possibly used in downlink) and/or an SSB symbol.

In the terminal, the second resource does not include a system frame and/or a subframe and/or a slot that are configured by the random access configuration information.

The above configuration makes it possible to avoid an overlap between the second resource and the first resource.

An embodiment of the present disclosure facilitates providing a communication method including: receiving, by a terminal from a base station, random access configuration information on a first resource for transmitting a random access channel and configuration information on a second resource configured based on configuration information of a signal and/or a channel other than the random access channel, the second resource being a resource for transmitting the random access channel and at least partially different from the first resource; transmitting, by the terminal, the random access channel to the base station using the first resource; and transmitting, by the terminal, the random access channel to the base station using the second resource.

With the configuration described above, the first resource for a certain transmission of the random access channel is at least partially different from the second resource for another transmission of the random access channel, thereby preventing or avoiding a contention between a certain transmission of the random access channel and another transmission of the random access channel. Thus, random access channel repetition can be appropriately performed in a random access procedure.

<Regarding Solution 4>

An embodiment of the present disclosure facilitates providing a terminal including: a control section that configures a first parameter value used for generating a first root sequence for a first transmission of a random access channel, and either a second parameter value used for generating a second root sequence for a second transmission of the random access channel or a difference to the first parameter value, the second parameter value being a parameter value different from the first parameter value; and a transmission section that transmits the random access channel to a base station as the first transmission based on the first root sequence corresponding to the first parameter value, and transmits the random access channel to the base station as the second transmission based on the second root sequence corresponding to the second parameter value or the difference.

With the above configuration, the random access channel preamble sequence for the second transmission of the random access channel is based on a route sequence other than the route sequence for the first transmission of the random access channel, thereby preventing or avoiding a contention between the first transmission of the random access channel and the second transmission of the random access channel. Thus, random access channel repetition can be appropriately performed in the random access procedure.

In the terminal, the first parameter value and the second parameter value are each a root sequence identifier value, and the control section configures the second root sequence by skipping the root sequence identifier value corresponding to the first parameter value in a case where a plurality of the root sequence identifier values are used based on the second parameter value or the difference.

The above configuration makes it possible to avoid the route sequence identifier value used for the first transmission of the random access channel even when a plurality of route sequence identifier values are used for the second transmission of the random access channel.

In the terminal, the second parameter value or the difference is indicated from the base station to the terminal by at least one of radio resource control (RRC), a medium access control-control element (MAC-CE), and/or downlink control information (DCI).

The above configuration enables flexible (when RRC is used) or dynamic (when MAC-CE and/or DCI is used) control for the configuration of the route sequence for the second transmission of the random access channel.

An embodiment of the present disclosure facilitates providing a terminal including: a control section that configures a number of available preambles per resource for a random access channel, the number being greater than 64, and among the available preambles, randomly configures a first preamble for a first transmission of the random access channel and randomly configures a second preamble for a second transmission of the random access channel; and a transmission section that transmits the random access channel including the first preamble to a base station as the first transmission, and transmits the random access channel including the second preamble to the base station as the second transmission.

According to the above configuration, the number of preambles for random access channel transmission increases from the conventional number of preambles, and different preambles are likely to be randomly configured for the first transmission of the random access channel and the second transmission of the random access channel, thereby preventing or avoiding a contention between the first transmission of the random access channel and the second transmission of the random access channel. Thus, random access channel repetition can be appropriately performed in the random access procedure.

An embodiment of the present disclosure facilitates providing a communication method including: configuring, by a terminal, a first parameter value used for generating a first root sequence for a first transmission of a random access channel, and either a second parameter value used for generating a second root sequence for a second transmission of the random access channel or a difference to the first parameter value, the second parameter value being a parameter value different from the first parameter value; transmitting, by the terminal, the random access channel to a base station as the first transmission based on the first root sequence corresponding to the first parameter value; and transmitting, by the terminal, the random access channel to the base station as the second transmission based on the second root sequence corresponding to the second parameter value or the difference.

With the above configuration, the random access channel preamble sequence for the second transmission of the random access channel is based on a route sequence other than the route sequence for the first transmission of the random access channel, thereby preventing or avoiding a contention between the random access channel initial transmission and the random access channel repetition. Thus, the random access channel repetition can be appropriately performed in the random access procedure.

An embodiment of the present disclosure facilitates providing a communication method including: configuring, by a terminal, a number of available preambles per resource for a random access channel, the number being greater than 64; randomly configuring, by the terminal, a first preamble for a first transmission of the random access channel among the available preambles; randomly configuring, by the terminal, a second preamble for a second transmission of the random access channel among the available preambles; transmitting, by the terminal, the random access channel including the first preamble to a base station as the first transmission; and transmitting, by the terminal, the random access channel including the second preamble to the base station as the second transmission.

According to the above configuration, the number of preambles for random access channel transmission increases from the conventional number of preambles, and different preambles are likely to be randomly configured for the first transmission of the random access channel and the second transmission of the random access channel, thereby preventing or avoiding a contention between the first transmission of the random access channel and the second transmission of the random access channel. Thus, random access channel repetition can be appropriately performed in the random access procedure.

<Regarding Solution 5>

An embodiment of the present disclosure facilitates providing a terminal including: a control section that configures a first preamble identifier for a first transmission of a random access channel from a first group including a first number of preamble identifiers for the first transmission among a first specific number of the preamble identifiers, and configures a second preamble identifier for a second transmission of the random access channel from a second group including a second number of the preamble identifiers for the second transmission, the second number being a number resulting from subtracting the first number from the first specific number; and a transmission section that transmits the random access channel to a base station as the first transmission based on the first preamble identifier, and transmits the random access channel to the base station as the second transmission based on the second preamble identifier.

With the above configuration, a preamble group for the first transmission of the random access channel and a preamble group for the second transmission of the random access channel are distinguished from each other, and the preamble identifier to be used for the second transmission of the random access channel is different from the preamble identifier to be used for the first transmission of the random access channel, thereby preventing or avoiding a contention between the first transmission of the random access channel and the second transmission of the random access channel even in a case of using a conventional RO. Thus, random access channel repetition can be appropriately performed in the random access procedure. In addition, no additional resource is used for the second transmission of the random access channel; accordingly, the load and resource efficiency of the base station that blind-decodes the random access channel can be maintained as in the conventional case.

In the terminal, the terminal further includes a reception section that receives the first number or the second number from the base station, wherein, when the first number is received, the control section configures the second number by subtracting the first number from the first specific number, and when the second number is received, the control section configures the first number by subtracting the second number from the first specific number.

With the above configuration, only the number of preamble identifiers for one preamble group is indicated to the terminal, thereby preventing an increase in the amount of signaling.

In the terminal, the first group and the second group are divided from a predefined third group including a third number of the preamble identifiers among a second specific number of the preamble identifiers, and are divided from a predefined fourth group including a fourth number of the preamble identifiers, the fourth number being a number resulting from subtracting the third number from the second specific number.

The above configuration makes it possible to use existing defined groups, so that fewer changes to the specification is necessary.

In the terminal, a control section that configures, in a duration, a first period for a first transmission of a random access channel and a second period for a second transmission of the random access channel, the second period being a period different from the first period; and a transmission section that transmits the random access channel to a base station as the first transmission in the first period, and transmits the random access channel to the base station as the second transmission in the second period.

With the above configuration, the first transmission of the random access channel and the second transmission of the random access channel are performed in different periods respectively, thereby preventing or avoiding a contention between the first transmission of the random access channel and the second transmission of the random access channel even in a case of using a conventional RO. Thus, random access channel repetition can be appropriately performed in the random access procedure. In addition, no additional resource is used for the second transmission of the random access channel; accordingly, the load and resource efficiency of the base station that blind-decodes the random access channel can be maintained as in the conventional case.

An embodiment of the present disclosure facilitates providing a communication method including: configuring, by a terminal, a first preamble identifier for a first transmission of a random access channel from a first group including a first number of preamble identifiers for the first transmission among a first specific number of the preamble identifiers; configuring, by the terminal, a second preamble identifier for a second transmission of the random access channel from a second group including a second number of the preamble identifiers for the second transmission, the second number being a number resulting from subtracting the first number from the first specific number; transmitting, by the terminal, the random access channel to a base station as the first transmission based on the first preamble identifier; and transmitting, by the terminal, the random access channel to the base station as the second transmission based on the second preamble identifier.

With the above configuration, a preamble group for the first transmission of the random access channel and a preamble group for the second transmission of the random access channel are distinguished from each other, and the preamble identifier to be used for the second transmission of the random access channel is different from the preamble identifier to be used for the first transmission of the random access channel, thereby preventing or avoiding a contention between the first transmission of the random access channel and the second transmission of the random access channel even in a case of using a conventional RO. Thus, random access channel repetition can be appropriately performed in the random access procedure. In addition, no additional resource is used for the second transmission of the random access channel; accordingly, the load and resource efficiency of the base station that blind-decodes the random access channel can be maintained as in the conventional case.

An embodiment of the present disclosure facilitates providing a communication method including: configuring, by a terminal, in a duration, a first period for a first transmission of a random access channel and a second period for a second transmission of the random access channel, the second period being a period different from the first period; transmitting, by the terminal, the random access channel to a base station as the first transmission in the first period; and transmitting, by the terminal, the random access channel to the base station as the second transmission in the second period.

With the above configuration, the first transmission of the random access channel and the second transmission of the random access channel are performed in different periods respectively, thereby preventing or avoiding a contention between the first transmission of the random access channel and the second transmission of the random access channel even in a case of using a conventional RO. Thus, random access channel repetition can be appropriately performed in the random access procedure. In addition, no additional resource is used for the second transmission of the random access channel; accordingly, the load and resource efficiency of the base station that blind-decodes the random access channel can be maintained as in the conventional case.

(Supplement to Embodiment)

Although an embodiment of the present disclosure has been described above, the disclosed invention is not limited to such an embodiment, and those skilled in the art will understand various variations, modifications, alternatives, substitutions, and the like. Although the description has been given using specific numerical examples to facilitate understanding of the invention, these numerical values are merely examples and any appropriate value may be used unless otherwise noted. The categories of items in the above description are not essential to the present disclosure, and items described in two or more categories may be used in combination as necessary, or an item described in one category may be applied to an item described in another category (as long as there is no contradiction). The boundaries of functional or processing sections in the functional block diagrams do not necessarily correspond to the boundaries of physical parts. The operations of a plurality of functional sections may be physically performed by a single part, or the operations of a single functional section may be physically performed by a plurality of parts. For the processing procedures described in the embodiment, the order of the processing may be changed as long as there is no contradiction. For convenience of the processing description, base station 100 and terminal 200 are described using the functional block diagrams, but such apparatuses may be realized in hardware, in software, or in a combination thereof. The software operated by a processor included in base station 100 according to an embodiment of the present disclosure and the software operated by a processor included in terminal 200 according to an embodiment of the present disclosure may be respectively stored in random access memory (RAM), flash memory, read-only memory (ROM), EPROM, EEPROM, a register, a hard disk (HDD), a removable disk, CD-ROM, a database, a server, or any other suitable storage medium.

<Notification of Information and Signaling>

The notification of information is not limited to the embodiments described in the present disclosure, and the information may be notified by another method. For example, the notification of information may be performed out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

<Application System>

The embodiments described in the present specification may be applied to at least one of systems using Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

<Processing Procedure and the like>

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

<Operation of Base Station>

Specific operations which are described in the present disclosure as being performed by the base station may sometimes be performed by an upper node depending on the situation. Various operations performed for communication with a user terminal in a network constituted by one network node or a plurality of network nodes including a base station can be obviously performed by at least one of the base station and a network node other than the base station (examples include, but not limited to, MME or S-GW). Although there is one network node in addition to the base station in the case illustrated above, a plurality of other network nodes may be combined (for example, MME and S-GW).

<Direction of Input and Output>

The information and the like (see "Information and Signals") can be output from a higher layer (or a lower layer) to a lower layer (or a higher layer). The information, the signals, and the like may be input and output through a plurality of network nodes.

(Handling of Input and Output Information and the like)

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

<Determination Method>

The determination may be made based on a value expressed by one bit (0 or 1), based on a Boolean value (true or false), or based on comparison with a numerical value (for example, comparison with a predetermined value).

<Variations and the like of Aspects>

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

<Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a radio technique (e.g., an infrared ray and a microwave), the at least one of the wired technique and the radio technique is included in the definition of the transmission medium.

information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

<System and Network>

The terms "system" and "network" used in the present disclosure can be interchangeably used.

<Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

<Base Station>

The terms "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

<Mobile Station>

The terms "Mobile Station (MS)", "user terminal", "User Equipment (UE)", and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

<Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user terminal. For example, the embodiments of the present disclosure may find application in a configuration that results from replacing communication between the base station and the user terminal with communication between multiple user terminals (such communication may, for example, be referred to as device-to-device (D2D), vehicle-to-everything (V2X), or the like). In this case, UE 200 may be configured to have the functions that gNB 100 described above has. The wordings "uplink" and "downlink" may be replaced with a corresponding wording for inter-equipment communication (for example, "side"). For example, an uplink channel, a downlink channel, and the like may be replaced with a side channel.

Similarly, the user terminal in the present disclosure may be replaced with the base station. In this case, gNB 100 is configured to have the functions that UE 200 described above has.

<Meaning and Interpretation of Terms>

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming", "expecting", "considering", and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are nonlimiting and non-inclusive examples.

<Reference Signal>

The reference signal can also be abbreviated as an RS and may also be called as a pilot depending on the applied standard.

<Meaning of "Based on">

The description "based on" used in the present disclosure does not mean "based only on", unless otherwise specified. In other words, the description "based on" means both of "based only on" and "based at least on".

<"First" and "Second">

Any reference to elements by using the terms "first", "second", and the like used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

<Means>

The "means" in the configuration of each apparatus may be replaced with "section", "circuit", "device", or the like.

<Open Form>

In a case where terms "include", "including", and their modifications are used in the present disclosure, these terms are intended to be inclusive like the term "comprising". Further, the term "or" used in the present disclosure is not intended to be an exclusive "or".

<Time Unit such as TTI, Frequency Unit such as RB, and Radio Frame Configuration>

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on the basis of TTI to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell", "carrier", and the like in the present disclosure may be replaced with "BWP".

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

<Maximum Transmit Power>

"The maximum transmit power" described in the present disclosure may mean a maximum value of the transmit power, the nominal UE maximum transmit power, or the rated UE maximum transmit power.

<Article>

In a case where articles, such as "a", "an", and "the" in English, for example, are added in the present disclosure by translation, nouns following these articles may have the same meaning as used in the plural.

<"Different">

In the present disclosure, the expression "A and B are different" may mean that "A and B are different from each other". Note that, the expression may also mean that "A and B are different from C". The expressions "separated" and "coupled" may also be interpreted in the same manner as the expression "A and B are different".

Industrial Applicability

The present disclosure is useful for radio communication systems.

Reference Signs List

    10 Radio communication system
    20 NG-RAN
    100 gNB (base station)
    200 UE (terminal)
    101, 202 Transmission section
    102, 201 Reception section
    103, 203 Control section
    1001 Processor
    1002 Memory
    1003 Storage
    1004 Communication apparatus

1005 Input apparatus
1006 Output apparatus
1007 Bus

**Claims**

1. A terminal, comprising:

   a control section that configures a first information portion on a first resource for transmitting a random access channel, and configures a second information portion on a second resource for transmitting the random access channel, the second resource being a resource at least partially different from the first resource; and
   a transmission section that transmits the random access channel to a base station using the first resource based on the first information portion, and transmits the random access channel to the base station using the second resource based on the second information portion.

2. The terminal according to claim 1, wherein, when a plurality of the second information portions are present, the transmission section transmits the random access channel a plurality of times using a plurality of the second resources respectively corresponding to the plurality of second information portions.

3. The terminal according to claim 1, wherein, when a single second information portion is present, the transmission section transmits the random access channel a plurality of times using the second resource corresponding to the single second information portion, the single second information portion being the second information portion.

4. The terminal according to claim 1, wherein.

   the first resource includes a first system frame for transmitting the random access channel, a first subframe in the first system frame, and a first slot in the first subframe,
   the second resource includes a second system frame for transmitting the random access channel, a second subframe in the second system frame, and a second slot in the second system frame, and
   at least one of the first system frame, the first subframe, and/or the first slot is different in a system frame number, a subframe number, and/or a slot number from at least a corresponding one of the second system frame, the second subframe, and/or the second slot.

5. The terminal according to claim 1, wherein the first resource is completely different from the second resource.

6. A communication method, comprising:

   configuring, by a terminal, a first information portion on a first resource for transmitting a random access channel;
   configuring, by the terminal, a second information portion on a second resource for transmitting the random access channel, the second resource being a resource at least partially different from the first resource;
   transmitting, by the terminal, the random access channel to a base station using the first resource based on the first information portion; and
   transmitting, by the terminal, the random access channel to the base station using the second resource based on the second information portion.

FIG. 1

FR1
{15,30,60} kHz SCS
5~100 MHz BW

FR2
{60,120,(240)} kHz SCS
50~400 MHz BW

FR2x

0.41 GHz    1 GHz        7.125 GHz   10 GHz   24.25 GHz        52.6 GHz   71 GHz        100 GHz

f

FIG. 2

FIG. 3

EP 4 465 742 A1

200

100

UE

gNB

S101: Msg1 (RA Preamble)

S102: Msg2 (RA Response)

S103: Msg3 (Scheduled PUSCH)

S104: Msg4 (Contention Resolution)

FIG. 4

200

100

UE

gNB

S201: MsgA (RA Preamble + Data)
e.g., Msg1+Msg3

S202: MsgB
e.g., Msg2+Msg4

FIG. 5

200
100

UE — 200

gNB — 100

S301: RA Preamble Assignment

S302: Msg1 (RA Preamble)

S303: Msg2 (RA Response)

FIG. 6

| PRACH configuration index | Preamble format | $n_f \bmod x = y$ | | Subframe number | Starting symbol | Number of PRACH slots within a subframe | $N_t^{RA,slot}$, number of time-domain PRACH occasions within a PRACH slot | $N_{dur}^{RA}$, PRACH duration |
|---|---|---|---|---|---|---|---|---|
| | | x | y | | | | | |
| ... | ... | ... | ... | ... | ... | ... | ... | ... |
| 67 | A1 | 16 | 1 | 9 | 0 | 2 | 6 | 2 |
| 68 | A1 | 8 | 1 | 9 | 0 | 2 | 6 | 2 |
| 69 | A1 | 4 | 1 | 9 | 0 | 1 | 6 | 2 |
| 70 | A1 | 2 | 1 | 9 | 0 | 1 | 6 | 2 |
| 71 | A1 | 2 | 1 | 4,9 | 7 | 1 | 3 | 2 |
| 72 | A1 | 2 | 1 | 7,9 | 7 | 1 | 3 | 2 |
| 73 | A1 | 2 | 1 | 7,9 | 0 | 1 | 6 | 2 |
| 74 | A1 | 2 | 1 | 8,9 | 0 | 2 | 6 | 2 |
| *75* | *A1* | *2* | *1* | *4,9* | *0* | *2* | *6* | *2* |
| 76 | A1 | 2 | 1 | 2,3,4,7,8,9 | 0 | 1 | 6 | 2 |
| 77 | A1 | 1 | 0 | 9 | 0 | 2 | 6 | 2 |
| 78 | A1 | 1 | 0 | 9 | 7 | 1 | 3 | 2 |
| 79 | A1 | 1 | 0 | 9 | 0 | 1 | 6 | 2 |
| 80 | A1 | 1 | 0 | 8,9 | 0 | 2 | 6 | 2 |
| 81 | A1 | 1 | 0 | 4,9 | 0 | 1 | 6 | 2 |
| 82 | A1 | 1 | 0 | 7,9 | 7 | 1 | 3 | 2 |
| 83 | A1 | 1 | 0 | 3,4,8,9 | 0 | 1 | 6 | 2 |
| 84 | A1 | 1 | 0 | 3,4,8,9 | 0 | 2 | 6 | 2 |
| 85 | A1 | 1 | 0 | 1,3,5,7,9 | 0 | 1 | 6 | 2 |
| 86 | A1 | 1 | 0 | 0,1,2,3,4,5,6,7,8,9 | 7 | 1 | 3 | 2 |
| ... | ... | ... | ... | ... | ... | ... | ... | ... |

FIG. 7

FIG. 8

```
ssb-perRACH-OccasionAndCB-PreamblesPerSSB   CHOICE {
        oneEighth                              ENUMERATED
{n4,n8,n12,n16,n20,n24,n28,n32,n36,n40,n44,n48,n52,n56,n60,n64},
        oneFourth                              ENUMERATED
{n4,n8,n12,n16,n20,n24,n28,n32,n36,n40,n44,n48,n52,n56,n60,n64},
        oneHalf                                ENUMERATED
{n4,n8,n12,n16,n20,n24,n28,n32,n36,n40,n44,n48,n52,n56,n60,n64},
        one                                    ENUMERATED
{n4,n8,n12,n16,n20,n24,n28,n32,n36,n40,n44,n48,n52,n56,n60,n64},
        two                                    ENUMERATED
{n4,n8,n12,n16,n20,n24,n28,n32},
        four                                   INTEGER (1..16),
        eight                                  INTEGER (1..8),
        sixteen                                INTEGER (1..4)
}
}
```

FIG. 9

200                100

**UE**                **gNB**

SSB

SIB1 with additional "**PRACH configuration index**"

PRACH (initial transmission)

PRACH (N times repeated)

**FIG. 10**

200                100

**UE**                **gNB**

SSB

SIB1 with conventional "**PRACH configuration index**" only

PRACH (initial transmission)

PRACH#0 using the configured system frame (#x)

PRACH (N times repeated)

PRACH#0 using the system frame with the SFN after the configured system frame (#x+1)

**FIG. 11**

| PRACH configuration index (for initial) | Nf mod x = y | Subframe number | Number of PRACH slots within a subframe | ... |
|---|---|---|---|---|
| ... | ... | ... | ... | ... |
| 75 | - | 3,8 | - | - |

FIG. 12

```
RACH-ConfigCommon ::=                    SEQUENCE {
    rach-ConfigGeneric                   RACH-ConfigGeneric,
    totalNumberOfRA-Preambles            INTEGER (1..63)                                              OPTIONAL,  -- Need S
    [omitted]
    prach-RootSequenceIndex                  CHOICE {
        1839                                     INTEGER (0..837),
        1139                                     INTEGER (0..137)
    },
    [omitted]
    prach-RootSequenceIndex-r16              CHOICE {
        1571                                     INTEGER (0..569),
        11151                                    INTEGER (0..1149)
    }   OPTIONAL     -- Need R
    (Opt2-2-1)prach-RootSequenceIndexDiffForRepetition    INTEGER (0..1149),
    (Opt2-2-2)prach-RootSequenceIndexForRepetition    INTEGER (0..1149),

}
```

FIG. 13

Sequence number u in increasing order of i

skipped

| 0 – 19 | 1 | 138 | 2 | 137 | 3 | 136 | 4 | 135 | 5 | 134 | 6 | 133 | 7 | 132 | 8 | 131 | 9 | 130 | 10 | 129 |
|---|---|---|---|---|---|---|---|---|---|---|---|---|---|---|---|---|---|---|---|---|
| 20 – 39 | 11 | 128 | Opt3-1 and 3-2 | | | | | | 15 | 124 | 16 | 123 | 17 | 122 | 18 | 121 | 19 | 120 | 20 | 119 |
| 40 – 59 | 21 | 118 | 22 | 117 | 23 | 116 | 24 | 115 | 25 | 114 | 26 | 113 | 27 | 112 | 28 | 111 | 29 | 110 | 30 | 109 |
| 60 – 79 | 31 | 108 | 32 | 107 | 33 | 106 | 34 | 105 | 35 | 104 | Opt3-1 | | | | 38 | 101 | 39 | 100 | 40 | 99 |
| 80 – 99 | 41 | 98 | 42 | 97 | 43 | 96 | 44 | 95 | 45 | 94 | 46 | 93 | 47 | 92 | 48 | 91 | 49 | 90 | 50 | 89 |
| 100 – 119 | 51 | 88 | 52 | 87 | 53 | 86 | 54 | 85 | 55 | 84 | 56 | 83 | 57 | 82 | 58 | 81 | 59 | 80 | 60 | 79 |
| 120 – 137 | 61 | 78 | 62 | 77 | 63 | 76 | 64 | 75 | 65 | 74 | 66 | 73 | 67 | 72 | 68 | 71 | 69 | 70 | - | - |
| 138 – 837 | N/A | | | | | | | | | | | | | | | | | | | |

Root sequence index:

- for PRACH initial transmission

- for PRACH repetition(s)

FIG. 14

| | Group A | | Group B | |
|---|---|---|---|---|
| **Init. tx or repetition** | Init. Tx | Repetition | Init. Tx | Repetition |
| **PRACH preamble index** | 0 to X | (X+1) to Y | (Y+1) to (Y+X+1) | (Y+X+2) to 63 |

FIG. 15

100

101
TRANSMISSION
SECTION

103
CONTROL
SECTION

102
RECEPTION
SECTION

FIG. 16

200

201
RECEPTION
SECTION

203
CONTROL
SECTION

202
TRANSMISSION
SECTION

FIG. 17

1001
PROCESSOR

1007

1004
COMMUNICATION
APPARATUS

1002
MEMORY

1005
INPUT
APPARATUS

1003
STORAGE

1006
OUTPUT
APPARATUS

100, 200

FIG. 18

FIG. 19

## INTERNATIONAL SEARCH REPORT

| | International application No. |
|---|---|
| | **PCT/JP2022/001177** |

**A. CLASSIFICATION OF SUBJECT MATTER**

*H04W 74/08*(2009.01)i; *H04W 4/70*(2018.01)i; *H04W 72/04*(2009.01)i
FI: H04W74/08; H04W72/04 131; H04W4/70

According to International Patent Classification (IPC) or to both national classification and IPC

**B. FIELDS SEARCHED**

Minimum documentation searched (classification system followed by classification symbols)

H04B7/24-7/26, H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/135455 A1 (NTT DOCOMO, INC.) 10 August 2017 (2017-08-10) paragraphs [0075]-[0080], fig. 11 | 1-6 |
| A | JP 2020-162170 A (KYOCERA CORP.) 01 October 2020 (2020-10-01) paragraphs [0131]-[0138] | 1-6 |
| A | NTT DOCOMO, INC. Moderator's summary of discussion [RAN94e-R18Prep-02] UL Enhancements (e.g. coverage enhancements; excluding MIMO) [online]. 3GPP TSG RAN #94e RP-212662. 01 November 2021, [retrieved on 25 July 2022], Internet<URL:https://www.3gpp.org/ftp/tsg_ran/TSG_RAN/TSGR_94e/Docs/RP-212662.zip> pp. 70-77, section 4.1.2 | 1-6 |
| A | WO 2019/024130 A1 (QUALCOMM INCORPORATED) 07 February 2019 (2019-02-07) paragraphs [0139]-[0141] | 1-6 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 July 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/001177**

| Patent document cited in search report | | | Publication date (day/month/year) | Patent family member(s) | | | Publication date (day/month/year) |
|---|---|---|---|---|---|---|---|
| WO | 2017/135455 | A1 | 10 August 2017 | US | 2021/0127424 | A1 | |
| | | | | paragraphs [0119]-[0124], fig. 11 | | | |
| | | | | EP | 3413607 | A1 | |
| | | | | CN | 108702635 | A | |
| JP | 2020-162170 | A | 01 October 2020 | US | 2020/0187245 | A1 | |
| | | | | paragraphs [0171]-[0178] | | | |
| | | | | WO | 2019/031427 | A1 | |
| | | | | EP | 3651503 | A1 | |
| | | | | CN | 110999404 | A | |
| WO | 2019/024130 | A1 | 07 February 2019 | US | 2020/0267770 | A1 | |
| | | | | paragraphs [0143]-[0145] | | | |
| | | | | CN | 110999392 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.211 V17.0.0*, December 2021
- *3GPP TS 38.213 V17.0.0*, December 2021
- *3GPP TS 38.321 V16.7.0*, December 2021

- Further NR Coverage Enhancement. *RP-213579, 3GPP TSG RAN Meeting #94-e, 3GPP*, December 2021